# EUROPEAN PATENT APPLICATION

(11) **EP 2 911 418 A1**
(43) Date of publication of application: **26.08.2015**
(21) Application number: 15155814.5
(22) Date of filing: 19.02.2015
(51) Int. Cl.: H04W 4/02, H04L 29/08

(54) **Communication function-equipped electronic device and message communication method thereof**

(30) Priority: 21.02.2014 KR 20140020027
(71) Applicant: Samsung Electronics Co., Ltd, Gyeonggi-do 443-742 (KR)
(72) Inventor: Noh, Yoomi, 443-742 Gyeonggi-do (KR); Song, Sejun, 443-742 Gyeonggi-do (KR); Chung, Dohee, 443-742 Gyeonggi-do (KR); Cha, Soonhyun, 443-742 Gyeonggi-do (KR)
(74) Representative: Nederlandsch Octrooibureau

(57) **Abstract**

A method and device for operating an electronic device having a communication function are provided. The method includes transmitting location information of the electronic device; receiving a notification message notifying of an inbound message in association with the location information; receiving a user input related to the notification message; and receiving the inbound message in response to the user input. The electronic device includes a communication module; a display module; and a processor configured to control the communication module and the display module based on information detected on the display module, wherein the processor is further configured to control displaying at least one section among a plurality of location-based sections via the display module, receiving a user input made on the displayed section; receiving content input via the display module, and transmitting the content based on the displayed at least one section and at least part of the user input.

## Description

### BACKGROUND

### 1. Field of the Invention

The present invention relates generally to a location-based message communication method and an electronic device therefore, and more particularly, to a method and electronic device for transmitting a location-based message to a person or an unspecified number of persons and receiving the location-based message from a person or an unspecified number of persons.

### 2. Description of the Related Art

An electronic device may communicate messages (e.g. Short Message Service (SMS), Multimedia Messaging Service (MMS), and Social Networking Service (SNS) messages) with other devices via a network. The electronic device of the sender may transmit location information to a server. The server may receive the location information from a receiver. If the location information match, the server delivers the message transmitted by the sender to the receiver.

In a location-based messaging method described above, the receiver may receive unwanted messages (e.g. advertisement messages) from an unspecified number of transmitters only for being in the area designated by the transmitters. From the viewpoint of the transmitter, a message transmitted by the transmitter may be received by an unspecified number of devices only for being within a reception area designated in the message.

### SUMMARY

The present invention has been made to address the above-mentioned problems and disadvantages, and to provide at least the advantages described below.

In accordance with an aspect of the present invention, a method of operating an electronic device having a communication function is provided. The method includes transmitting location information of the electronic device; receiving a notification message notifying of an inbound message in association with the location information; receiving a user input related to the notification message; and receiving the inbound message in response to the user input.

In accordance with another aspect of the present invention, a method of operating an electronic device having a communication function is provided. The method includes transmitting sender information and location information of the electronic device; receiving and displaying a notification message notifying existence of an inbound message corresponding to the sender information and the location information; detecting user selection of the sender information; transmitting the selected sender information; and receiving the inbound message corresponding to the selected sender information.

In accordance with another aspect of the present invention, a method of operating an electronic device having a communication function is provided. The method includes transmitting location information designated for a message; receiving a message request including recipient information; and transmitting an acknowledgement message for accepting receipt of the message in response to a user input to the message request.

In accordance with another aspect of the present invention, a method of operating an electronic device having a communication function is provided. The method includes storing a message; designating first location information and first recipient information in association with the message; transmitting at least the first recipient information among the first location information and the first recipient information; receiving second location information and second recipient information; and transmitting the message when the second recipient information corresponds to the first recipient information and the second location information corresponds to the first location information.

In accordance with another aspect of the present invention, a method of operating an electronic device having a communication function is provided. The method includes receiving and storing location information and a message; acquiring location information of the electronic device; and displaying the message when the acquired location information corresponds to the stored location information.

In accordance with another aspect of the present invention, a method of operating an electronic device having a communication function is provided. The method includes receiving and storing location information; acquiring location information of the electronic device; transmitting, when the acquired location information corresponds to the stored location information, at least the recipient information among the recipient information and the acquired location information; and receiving and displaying a message corresponding to the recipient information.

In accordance with another aspect of the present invention, a method of operating an electronic device is provided. The method includes displaying, by a display module of the electronic device, at least one section among a plurality of location-based sections; receiving a user input to the displayed section; receiving a content via the display module; and transmitting the content, using a communication module of the electronic device, based on the displayed section and at least part of the user input.

In accordance with another aspect of the present invention, a method of operating an electronic device is provided. The method includes checking, by the electronic device, a location of the electronic device; displaying, on a display module of the electronic device, a section related to the checked location among location-based sections; receiving a content related to the displayed section in at least one time period of during, before, and after displaying the section; and displaying at least part of the content on the displayed section.

In accordance with another aspect of the present invention, an electronic device is provided. The electronic device includes a communication module, a display module, and a processor configured to control the communication module and the display module based on information detected on the display module, wherein the processor is further configured to control displaying at least one section among a plurality of location-based sections via the display module, receiving a user input made on the displayed section; receiving content input via the display module, and transmitting the content based on the displayed at least one section and at least part of the user input.

In accordance with another aspect of the present invention, an electronic device is provided. The electronic device includes a communication module, a sensor, a touch panel configured to generate detection information in response to a touch made on a screen of a display module, and a processor configured to control the communication module and the display module based on the detection information generated by the touch panel, wherein the processor is further configured to control checking a location of the electronic device via at least one of the communication module and the sensor, displaying a section related to the checked location among location-based sections via the display module, receiving content related to the section in at least one time period of during, before, and after displaying the section, and displaying at least part of the content on the displayed section via the display module.

### BRIEF DESCRIPTION OF THE DRAWINGS

The foregoing and other aspects, features, and advantages of the present invention will be more apparent from the following description, taken in conjunction with the accompanying drawings, in which:
FIG. 1 is a block diagram of an electronic device according to an embodiment of the present invention;
FIG. 2 is a block diagram of hardware according to an embodiment of the present invention;
FIG. 3 is a block diagram of a programming module according to an embodiment of the present invention;
FIGs. 4A and 4B are diagrams illustrating user interface screens for designating a message receipt location according to an embodiment of the present invention;
FIG.s 5A and 5B are diagrams illustrating user interface screens for designating the recipient of a message according to an embodiment of the present invention;
FIGs. 6A and 6B are diagrams illustrating user interface screens for designating an unspecified number of persons as message senders according to an embodiment of the present invention;
FIGs. 7A-7C are diagrams illustrating user interface screens for designating a group of persons as message senders according to an embodiment of the present invention;
FIGs. 8A-8C are diagrams illustrating user interface screens for designating a person as a message sender according to an embodiment of the present invention;
FIG. 9 is a signal flow diagram of a location-based message communication method between a designated sender and receiver according to an embodiment of the present invention;
FIGs. 10A-10D are diagrams illustrating user interface screens having a plurality of location-based sections according to an embodiment of the present invention;
FIGs. 11A-11C are diagrams illustrating user interface screens of displaying a plurality of location-based sections according to an embodiment of the present invention;
FIGs. 12A-12D are diagrams illustrating user interface screens for explaining a section-based message posting according to an embodiment of the present invention;
FIGs. 13A-13D are diagrams illustrating user interface screens for explaining a section change operation according to an embodiment of the present invention;
FIGs. 14A-14D are diagrams illustrating user interfaces for explaining a section-based message posting operation according to an embodiment of the present invention
FIGs. 15A-15D are diagrams illustrating user interface screens for explaining a section-based message posting operation according to an embodiment of the present invention;
FIG. 16 is a signal flow diagram of a location-based message communication method with designation of recipient and sender according to an embodiment of the present invention;
FIG. 17 is a signal flow diagram of a location-based message communication method with designation of a sender and no recipient according to an embodiment of the present invention;
FIG. 18 is a signal flow diagram of a location-based message communication method with designation of an unspecified number of senders (all) and no receiver according to an embodiment of the present invention;
FIG. 19 is a signal flow diagram of a location-based message communication method with the designation of the recipient and the sender according to an embodiment of the present invention;
FIG. 20 is a signal flow diagram of a location-based message communication method with the designation of the recipient and the sender according to an embodiment of the present invention;
FIG. 21 is a signal flow diagram of a location-based direct message communication method according to an embodiment of the present invention; and
FIG. 22 is a signal flow diagram of a location-based direct message communication method according to an embodiment of the present invention.

### DETAILED DESCRIPTION OF EMBODIMENTS OF THE PRESENT INVENTION

The following description with reference to the accompanying drawings is provided to assist in a comprehensive understanding of various embodiments of the present invention as defined by the appended claims and their equivalents. It includes various details to assist in that understanding but these are to be regarded as merely exemplary. Accordingly, those of ordinary skill in the art will recognize that various changes and modifications of the various embodiments described herein can be made without departing from the scope and spirit of the present invention. In addition, descriptions of well-known functions and constructions are omitted for clarity and conciseness.

The terms and words used in the following description and claims are not limited to their dictionary meanings, but are merely used to enable a clear and consistent understanding of the present invention. Accordingly, it should be apparent to those skilled in the art that the following description of various embodiments of the present invention is provided for illustration purpose only and not for the purpose of limiting the present invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

An electronic apparatus according to the present invention may be an apparatus having a communication function. For example, the electronic device according to the present invention may be at least one of and/or combinations of a smart phone, a tablet Personal Computer (PC), a mobile phone, a video phone, an electronic-book (e-book) reader, a desktop PC, a laptop PC, a netbook computer, a Personal Digital Assistant (PDA), a Portable Multimedia Player (PMP), a Motion Picture Experts Group Audio Layer 3 (MP3) player, a mobile medical appliance, an electronic bracelet, an electronic necklace, an electronic accessory, a camera, a wearable device, an electronic clock, a wrist watch, home appliances, e.g. a refrigerator, an air conditioner, a cleaner, an oven, a microwave oven, a washing machine, an air cleaner, and the like, an artificial intelligence robot, a television, a Digital Video Disk (DVD) player, an audio player, various medical appliances, e.g. a Magnetic Resonance Angiography (MRA) device, a Magnetic Resonance Imaging (MRI) device, a Computerized Tomography (CT) device, an ultrasonography device and the like, a navigation device, a Global Positioning System (GPS) receiver, an Event Data Recorder (EDR), a Flight Data Recorder (FDR), a set-top box, a Television (TV) box, e.g. HomeSync™ of SAMSUNG Electronics, Co., Apple TV™ of APPLE, Co., and Google TV™ of Google, Co., an electronic dictionary, an infotainment device for a vehicle, an electronic equipment for a ship, e.g. a navigation device, a gyrocompass, etc., an avionic device, a security device, an electronic cloth, an electronic key, a camcorder, a game console, a Head-Mounted Display (HMD) unit, a flat panel display device, an electronic frame, an electronic album, a piece of furniture having a communication function and/or a part of a building/structure, an electronic board, an electronic signature receiving device, and a protector. It is obvious to those skilled in the art that the electronic device according to the present invention is not limited to the aforementioned devices.

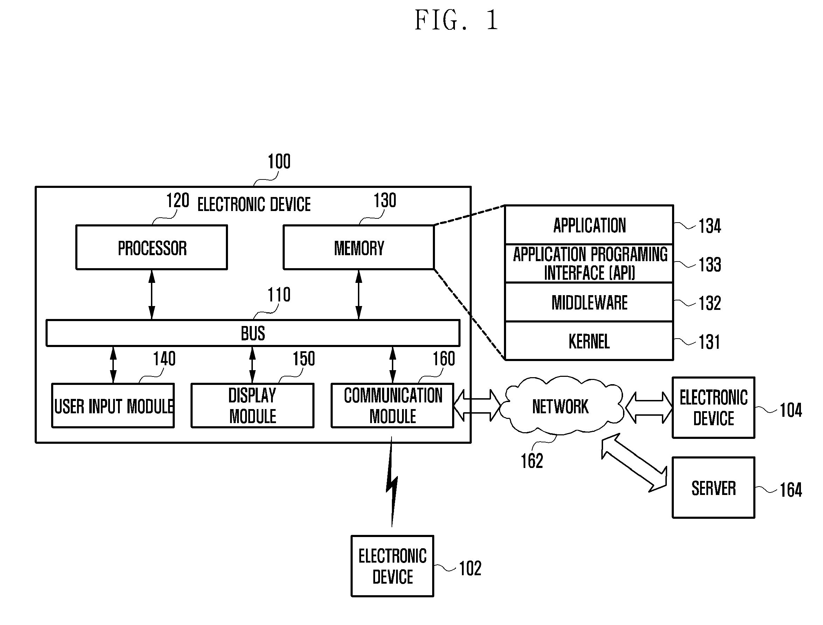

FIG. 1 is a block diagram of an electronic device 100 according to an embodiment of the present invention.

Referring to FIG. 1, the electronic device 100 includes a bus 110, a processor 120, a memory 130, a user input module 140, a display module 150, and a communication module 160.

The bus 110 is a circuit for interconnecting elements described above and for allowing a communication, e.g. by transferring a control message, between the elements described above.

The processor 120 receives commands from the above-mentioned other elements, e.g. the memory 130, the user input module 140, the display module 150, and the communication module 160, via, for example, the bus 110, deciphers the received commands, and performs operations and/or data processing according to the deciphered commands.

The memory 130 stores commands received from the processor 120 and/or other elements, e.g. the user input module 140, the display module 150, and the communication module 160, and/or commands and/or data generated by the processor 120 and/or other elements. The memory 130 includes programming modules, such as a kernel 131, middleware 132, an Application Programming Interface (API) 133, and an application 134. Each of the programming modules described above may be configured by software, firmware, hardware, and/or combinations of two or more thereof.

The kernel 131 controls and/or manages system resources, e.g. the bus 110, the processor 120 or the memory 130, used for execution of operations and/or functions implemented in other programming modules, such as the middleware 132, the API 133, and/or the application 134. Further, the kernel 131 provides an interface through which the middleware 132, the API 133, and/or the application 134 can access and then control and/or manage an individual element of the electronic device 100.

The middleware 132 performs a relay function which allows the API 133 and/or the application 134 to communicate with and exchange data with the kernel 131. Further, in relation to operation requests received from at least one of an application 134, the middleware 132 performs load balancing in relation to the operation requests by, for example, giving a priority in using a system resource, e.g. the bus 110, the processor 120, and/or the memory 130, of the electronic device 100 to at least one application from among the at least one of the application 134.

The API 133 is an interface through which the application 134 can control a function provided by the kernel 131 and/or the middleware 132, and includes, for example, at least one interface or function for file control, window control, image processing, and/or character control.

The user input module 140 receives, for example, a command and/or data from a user, and transfers the received command and/or data to the processor 120 and/or the memory 130 via the bus 110. The display module 150 displays an image, a video, and/or data to a user.

The communication module 160 connects the electronic device 100 to another electronic device 102 for communication. The communication module 160 supports at least one short range communication protocol (e.g. Wireless Fidelity (Wi-Fi), Bluetooth (BT), and Near Field Communication (NFC)) and network communication (e.g. Internet, Local Area Network (LAN), Wide Area Network (WAN), telecommunication network, cellular network, satellite network, and Plain Old Telephone Service (POTS) network) as denoted by reference number 162. The electronic devices 102 and 104, and the server 164 may each be a device identical in type with or different from the electronic device 100. The server 164 relays and manages the message communication between the devices (e.g. electronic devices 100 and 104). Also, the server 164 provides the site (e.g. home message board, work message board, and school message board) for posting messages. For this purpose, the server 164 includes a processor, a memory, and a communication module so as to perform the operations of receiving a message, storing the message, checking the recipient of the message and message receipt location, transmitting a message, announcing the information on the member located in a predetermined area (e.g. home, work, and school), and announcing the information on the message stored (e.g. posted) on a predetermined message board (e.g. predetermined storage area). Additionally or alternatively, the server 164 relays and manages the data communication among the devices located within a space (e.g. home, work, and school) and supports remote control among the devices. For this purpose, the server 164 includes a database for managing the information on the device identities, functions supported by the respective devices, the data stored in the respective devices, and device capabilities.

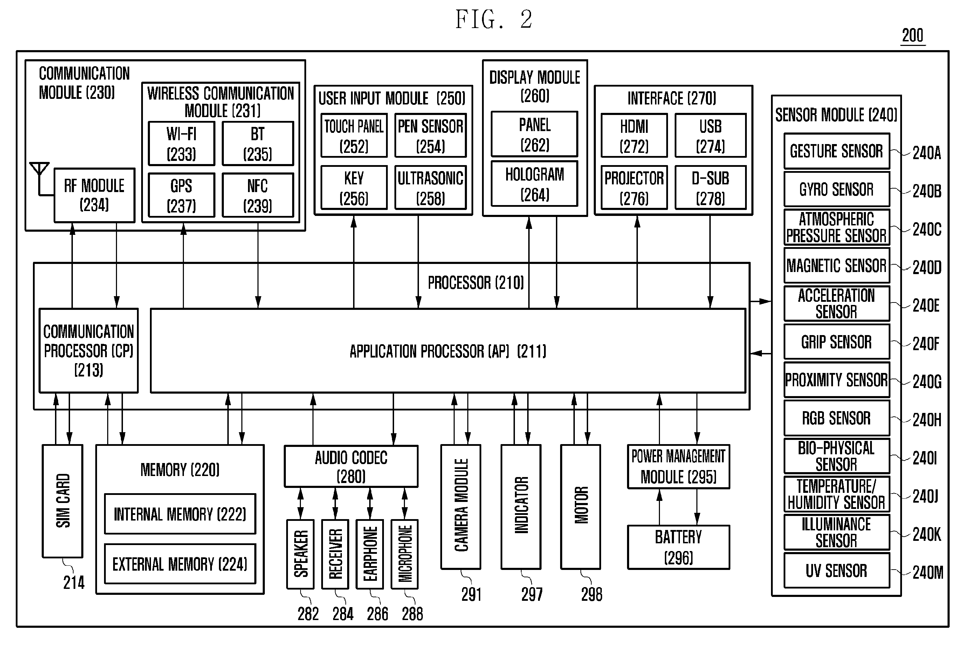

FIG. 2 is a block diagram of hardware 200 according to an embodiment of the present invention. The hardware 200 may be, for example, the electronic device 100 illustrated in FIG. 1.

Referring to FIG. 2, the hardware 200 includes at least one processor 210, a Subscriber Identification Module (SIM) card 214, a memory 220, a communication module 230, a sensor module 240, a user input module 250, a display module 260, an interface 270, an audio codec 280, a camera module 291, a power management module 295, a battery 296, an indicator 297, and a motor 298.

The processor 210 includes at least one Application Processor (AP) 211 and/or at least one Communication Processor (CP) 213. The processor 210 may be, for example, similar to the processor 120 as illustrated in FIG. 1. Although FIG. 2 shows the AP 211 and the CP 213 included in the processor 210, the AP 211 and the CP 213 may be included in different Integrated Circuit (IC) packages, respectively. According to an embodiment of the present invention, the AP 211 and the CP 213 may be included in a single IC package.

The AP 211 executes an Operating System (OS) or an application program to control a plurality of hardware and/or software elements connected to the AP 211 and performs processing and calculation of various data including the multimedia data. The AP 211 may be implemented by, for example, a System on Chip (SoC). According to an embodiment of the present invention, the processor 210 may further include a Graphics Processing Unit (GPU).

The CP 213 performs functions of managing a data link and/or converting a communication protocol in communication between an electronicdevice, e.g. the electronic device 100, including the hardware 200 and/or another electronic device connected via a network to the electronicdevice. The CP 213 may be implemented by, for example, an SoC. According to an embodiment of the present invention, the CP 213 performs at least a part of a multimedia control function. The CP 213 performs identification and authentication of a terminal in a communication network by using, for example, a user identification module, e.g. the SIM card 214. Further, the CP 213 provides services, such as a voice communication service, a video communication service, a short message service, and a packet data service, to a user.

Further, the CP 213 controls data transmission and/or reception of the communication module 230. Although the elements including the CP 213, the power management module 295, and the memory 220 are illustrated as being separate from the AP 211 in FIG. 2, the AP 211 may be implemented to include at least some, e.g. the CP 213, of the aforementioned elements according to an embodiment of the present invention.

According to an embodiment of the present invention, the AP 211 or the CP 213 loads a command and/or data received from at least one of a non-volatile memory and/or other elements connected thereto in a volatile memory and then processes the same. Further, the AP 211 or the CP 213 stores data received from and/or generated by at least one of the other elements in a non-volatile memory.

The SIM card 214 may be a card implementing a SIM and may be inserted in a slot formed at a position of an electronic device. The SIM card 214 includes identification information, e.g. an Integrated Circuit Card IDentifier (ICCID), and/or subscriber information, e.g. an International Mobile Subscriber Identity (IMSI).

The memory 220 includes an internal memory 222 and/or an external memory 224. The memory 220 may be, for example, similar to the memory 130 as illustrated in FIG. 1. The internal memory 222 includes at least one of a volatile memory, e.g., a Dynamic Random Access Memory (DRAM), a Static RAM (SRAM), a Synchronous Dynamic RAM (SDRAM), or the like, and/or a non-volatile memory, e.g., a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a NAND flash memory, a NOR flash memory, or the like. According to an embodiment of the present invention, the internal memory 222 may be a Solid State Drive (SSD). The external memory 224 may further include a flash drive, for example, a Compact Flash (CF) drive, a Secure Digital (SD) drive, a Micro Secure Digital (Micro-SD) drive, a Mini Secure Digital (Mini-SD) drive, an extreme Digital (xD) drive, a memory stick, and/or the like.

The communication module 230 includes a wireless communication module 231 and/or a Radio Frequency (RF) module 234. The communication module 230 may be, for example, similar to the communication module 160 as illustrated in FIG. 1. The wireless communication module 231 includes, for example, a WiFi module 233, a BT module 235, a GPS receiving module 237, and/or a NFC module 239. For example, the wireless communication module 231 provides a wireless communication function by using a wireless frequency. Additionally or alternatively, the wireless communication module 231 includes a network interface, e.g., a LAN card, and/or a modem for connecting the hardware 200 with a network (e.g., Internet, a LAN, a WAN, a telecommunication network, a cellular network, a satellite network, a Plain Old Telephone Service (POTS), and/or the like. The NFC module 239 includes a connection node for connection to an NFC antenna.

The RF module 234 performs data transmission/reception, for example, transmission and/or reception of an RF signal and/or a paged electronic signal. The RF module 234 includes, for example, a transceiver, a Power Amplifier Module (PAM), a frequency filter, a Low Noise Amplifier (LNA), and/or the like. Further, the RF module 234 further includes a component for transmitting and/or receiving an electromagnetic wave in free space in a wireless and/or wired communication, for example, a conductor, a conductive wire, and/or the like.

The sensor module 240 includes, for example, at least one of a gesture sensor 240A, a gyro sensor 240B, an atmospheric pressure sensor 240C, a magnetic sensor 240D, an acceleration sensor 240E, a grip sensor 240F, a proximity sensor 240G, a Red, Green, Blue (RGB) sensor 240H, a bio-physical sensor 240I, a temperature/humidity sensor 240J, an illuminance sensor 240K, and an Ultra Violet (UV) sensor 240M. The sensor module 240 measures a physical property and/or detects an operation state of an electronic device and converts the measured and/or detected information to an electrical signal. Additionally/alternatively, the sensor module 240 may include, for example, an olfactory sensor, such as an E-nose sensor, an Electro MyoGraphy (EMG) sensor, an Electro EncephaloGram (EEG) sensor, an Electro CardioGram (ECG) sensor, a fingerprint sensor, or the like. The sensor module 240 further includes a control circuit for controlling at least one sensor included in the sensor module 240.

The user input module 250 includes a touch panel 252, a pen sensor 254, which may be a digital pen sensor, a key 256, and an ultrasonic input device 258. The user input module 250 may be, for example, the user input module 140, as illustrated in FIG. 1. The touch panel 252 detects a touch input in at least one scheme among, for example, a capacitive scheme, a resistive scheme, an infrared scheme, and an acoustic wave scheme. Further, the touch panel 252 further includes a controller. In the case of the capacitive scheme, the touch panel recognizes an indirect touch as well as a direct touch. A direct touch scheme refers to a scheme in which a conductive object, e.g. a finger and/or a stylus pen makes direct contact with a touch screen. According to an embodiment of the present invention, an indirect touch scheme refers to a scheme in which a conductive material wrapped by a non-conductive material, e.g. a finger wearing a glove, approaches a touch screen and/or the non-conductive material, e.g. a glove containing a finger, contacts the touch screen. According to an embodiment of the present invention, the indirect touch scheme refers to a scheme in which a finger touches a non-conductive material, e.g. a cover for protecting a touch screen, in contact with an upper surface of the touch screen. According to an embodiment of the present invention, the indirect touch scheme refers to a scheme, usually called hovering, in which an event is generated as a finger approaches a touch screen within a predetermined distance without coming into contact with the touch screen. The touch panel 252 further include a tactile layer. In this case, the touch panel 252 provides a tactile response to a user. The touch panel 252 is provided at a screen, i.e. a touch screen, of the display module 260. The touch panel 252 may be implemented as an add-on type in which the touch panel is located on the touch screen, and/or as an on-cell type and/or an in-cell type in which the touch panel is inserted in the display module 260.

The pen sensor 254 is implemented, for example, in the same and/or similar method as that of receiving a user's touch input and/or by using a separate sheet for recognition. For example, a keypad and/or a touch key may be used as the key 256. The ultrasonic input device 258 is a device that identifies data by detecting a sound wave from a terminal to a microphone, e.g., a microphone 288, through a pen generating an ultrasonic wave signal, and can achieve wireless recognition. According to an embodiment of the present invention, the hardware 200 receives a user input from an external device, e.g., a network, a computer, and/or a server connected with the communication module 230, by using the communication module 230.

The display module 260 includes a panel 262 and/or a hologram 264. The display module 260 may be, for example, similar to the display module 150 as illustrated in FIG. 1. For example, the panel 262 may be a Liquid Crystal Display (LCD) and/or an Active Matrix-Organic Light Emitting Diode (AM-OLED). The panel 262 may be implemented to be, for example, flexible, transparent, and/or wearable. The panel 262 may be configured by the touch panel 252 and one module. The hologram 264 shows a three dimensional image in the air by using interference of light. According to an embodiment of the present invention, the display module 260 further includes a control circuit for controlling the panel 262 and/or the hologram 264.

The interface 270 includes, for example, a High-Definition Multimedia Interface (HDMI) 272, a Universal Serial Bus (USB) 274, a projector 276, and a D-subminiature connector (D-sub) 278. Additionally or alternatively, the interface 270 may include, for example, a SD drive, a Multi-Media Card (MMC), and/or an Infrared Data Association (IrDA) interface.

The audio codec 280 bilaterally converts a voice and an electrical signal to each other. The audio codec 280 converts voice information input and/or output via, for example, a speaker 282, a receiver 284, an earphone 286, and/or the microphone 288.

The camera module 291 is a device capable of photographing a still image and a moving image, and includes at least one image sensor, e.g., a front lens and/or a rear lens, an Image Signal Processor (ISP), and/or a flash LED according to an embodiment of the present invention.

The power management module 295 manages power of the hardware 200. The power management module 295 includes, for example, a Power Management IC (PMIC), a charger IC, and/or a battery gauge.

The PMIC may be mounted in, for example, an IC and/or an SoC semiconductor. Charging methods are classified into a wired charging method and a wireless charging method. The charger IC charges a battery and prevents introduction of over-voltage and/or over-current from a charger. According to an embodiment of the present invention, the charger IC includes a charger IC for at least one of the wired charging method and the wireless charging method. A magnetic resonance scheme, a magnetic induction scheme, and/or an electromagnetic scheme can be exemplified as the wireless charging method, and an additional circuit for wireless charging, such as a coil loop circuit, a resonance circuit, a rectifier circuit, and the like may be added.

The battery gauge measures, for example, a residual quantity of the battery 296, a voltage, a current, and/or a temperature during the charging. The battery 296 supplies power by generating electricity, and may be, for example, a rechargeable battery.

The indicator 297 displays a state, for example, a booting state, a message state, and/or a charging state of the hardware 200 and/or a part of the hardware, e.g., the AP 211. The motor 298 converts an electrical signal into a mechanical vibration.

The hardware 200 includes a processing unit, e.g., a GPU for supporting a mobile TV. The processing unit for supporting a mobile TV processes media data according to a standard of Digital Multimedia Broadcasting (DMB), Digital Video Broadcasting (DVB), media flow, or the like. Each of the elements of the hardware 200 according to the present invention may be configured by one or more components, which may have different names according to the type of the electronicdevice. The hardware 200 according to the present invention may include at least one of the aforementioned elements and/or may further include other additional elements, and/or some of the aforementioned elements may be omitted. Further, some of the elements of the hardware according to the present invention may be combined into one entity, which can perform the same functions as those of the elements before the combination.

The term "module" used in the present invention may refer to, for example, a unit including at least one combination of hardware, software, and firmware. The "module" may be interchangeably used with a term, such as unit, logic, logical block, component, and/or circuit. The "module" may be a minimum unit of an integrally configured article and/or a part thereof. The "module" may be a minimum unit performing at least one function and/or a part thereof. The "module" may be mechanically and/or electronically implemented. For example, the "module" according to the present invention may include at least one of an Application-Specific IC (ASIC) chip, a Field-Programmable Gate Arrays (FPGA), and a programmable-logic device for performing operations which are known and/or may be developed hereinafter.

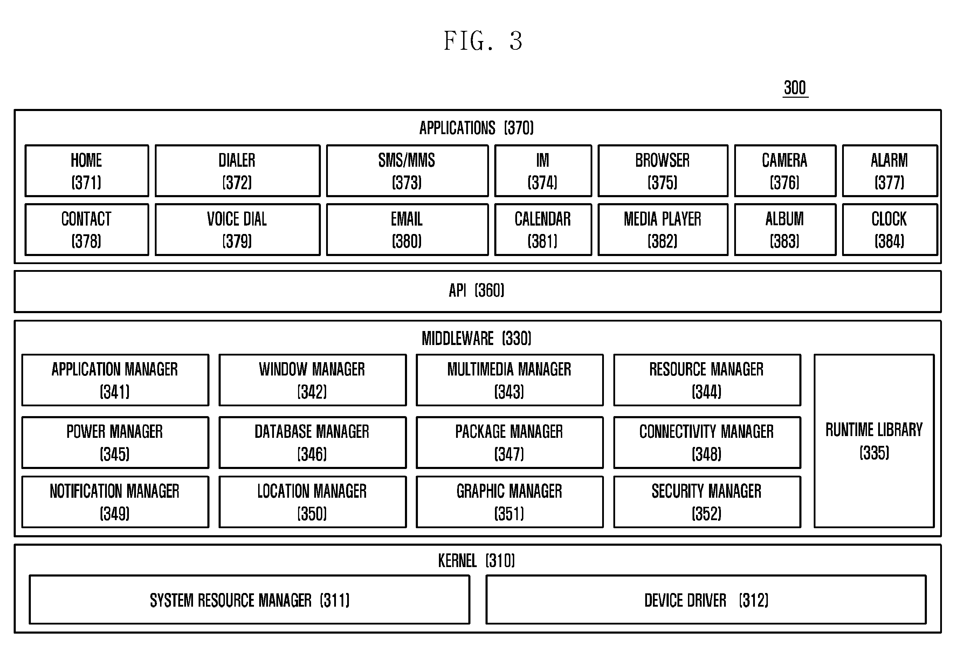

FIG. 3 is a block diagram of a programming module 300 according to an embodiment of the present invention.

Referring to FIG. 3, the programming module 300 may be included, e.g. stored, in the electronic device 100, e.g. the memory 130, as illustrated in FIG. 1. At least a part of the programming module 300 may be configured by software, firmware, hardware, and/or combinations of two or more thereof. The programming module 300 may include an OS that is implemented in hardware, e.g., the hardware 200 to control resources related to an electronic device, e.g., the electronic device 100, and/or various applications. e.g., applications 370, driven on the OS. For example, the OS may be Android, iOS, Windows, Symbian, Tizen, Bada, or the like. Referring to FIG. 3, the programming module 300 includes a kernel 310, middleware 330, an API 360, and applications 370.

The kernel 310, which may be like the kernel 131, includes a system resource manager 311 and/or a device driver 312. The system resource manager 311 includes, for example, a process manager, a memory manager, and a file system manager. The system resource manager 311 controls, allocates, and/or collects system resources. The device driver 312 includes, for example, a display driver, a camera driver, a Bluetooth driver, a shared memory driver, a USB driver, a keypad driver, a WiFi driver, and an audio driver. Further, according to an embodiment of the present invention, the device driver 312 includes an Inter-Process Communication (IPC) driver.

The middleware 330 includes a plurality of modules implemented in advance for providing functions commonly used by the applications 370. Further, the middleware 330 provides the functions via the API 360 such that the applications 370 can efficiently use restricted system resources within the electronicdevice 100. For example, as shown in FIG. 3, the middleware 330 includes at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 includes a library module that a compiler uses in order to add a new function via a programming language while one of the applications 370 is being executed. According to an embodiment of the present invention, the runtime library 335 performs an input/output, memory management, and/or a function for an arithmetic function.

The application manager 341 manages a life cycle of at least one of the applications 370. The window manager 342 manages Graphical User Interface (GUI) resources used by a screen. The multimedia manager 343 detects formats used for reproduction of various media files, and performs encoding and/or decoding of a media file by using a codec suitable for the corresponding format. The resource manager 344 manages resources such as a source code, a memory, and a storage space of at least one of the applications 370.

The power manager 345 manages a battery and/or power, while operating with a Basic Input/Output System (BIOS), and provides power information used for operation. The database manager 346 manages generation, search, and/or change of a database to be used by at least one of the applications 370. The package manager 347 manages installation and/or an update of an application distributed in a form of a package file.

For example, the connectivity manager 348 manages wireless connectivity such as Wi-Fi or Bluetooth. The notification manager 349 displays and/or notifies of an event, such as an arrival of a message, a promise, a proximity notification, and the like, in such a way that does not disturb a user. The location manager 350 manages location information of an electronicdevice. The graphic manager 351 manages a graphic effect which will be provided to a user, and/or a user interface related to the graphic effect. The security manager 352 provides all security functions used for system security and/or user authentication. According to an embodiment of the present invention, when an electronicdevice, e.g., the electronic device 100, has a telephone call function, the middleware 330 further includes a telephony manager for managing a voice and/or video communication function of the electronic device.

The middleware 330 generates and uses a new middleware module via various functional combinations of the aforementioned internal element modules. The middleware 330 provides modules according to types of OSs in order to provide differentiated functions. Further, the middleware 330 dynamically removes some of the existing elements and/or adds new elements. Accordingly, the middleware 330 excludes some of the elements described in the various embodiments of the present invention, further includes other elements, and/or substitutes the elements with elements having a different name and performing a similar function.

The API 360, which may be similar to the API 133, is a set of API programming functions, and may be provided with a different configuration according to the OS. For example, in a case of Android or iOS, one API set may be provided for each of the platforms, and in a case of Tizen, two or more API sets may be provided.

The applications 370, which may include an application similar to the application 134, includes, for example, a preloaded application and/or a third party application. The applications 370 include a home application 371, a dialer application 372, a Short Messaging Service (SMS)/Multlimedia Messaging Service (MMS) application 373, an Instant Messaging (IM) application 374, a browser application 375, a camera application 376, an alarm application 377, a contact application 378, a voice dial application 379, an email application 380, a calendar application 381, a media player application 382, an album application 383, and a clock application 384. However, the present embodiment is not limited thereto, and the applications 370 may include any other similar and/or suitable application.

At least a part of the programming module 300 is implemented by commands stored in non-transitory computer-readable storage media. When the commands are executed by at least one processor, e.g. the processor 210, at least one processor performs functions corresponding to the commands. The non-transitory computer-readable storage media is , for example, the memory 204. At least a part of the programming module 300 is implemented, e.g. executed, by, for example, the processor 210. At least a part of the programming module 300 includes, for example, a module, a program, a routine, a set of instructions and/or a process for performing at least one function.

The titles of the aforementioned elements of the programming module, e.g. the programming module 300, according to the present invention may vary depending on the type of the OS. The programming module according to the present invention may include at least one of the aforementioned elements and/or may further include other additional elements, and/or some of the aforementioned elements may be omitted. The operations performed by a programming module and/or other elements according to the present invention may be processed via a sequential, parallel, repetitive, and/or heuristic method, and some of the operations may be omitted and/or other operations may be added.

According to an embodiment of the present invention, an electronic device includes a communication module, a display module, and a processor which controls the communication module and the display module based on detection information detected on the display module, wherein the processor controls displaying at least one section among a plurality of location-based sections by means of the display module, receiving a user input made on the displayed section, receiving content input by means of the display module, and transmitting the content based on the displayed section and at least part of the user input. The location-based sections comprise at least one of a home-related section, a work-related section, a cor-related section, and a selected geographical location-related section. Receiving a user input includes displaying at least one of text, symbol, icon, motion picture, image representing at least one receiving device or recipient information on the section, and receiving a user input made with at least one touch or hovering gesture on to at least one of the text, symbol, icon, motion picture, and still picture. The processor controls displaying an input window in response to at least part of receiving the user input. The processor controls receiving an input made to at least one of the text, symbol, motion picture, icon, and still picture using the input window. Transmitting content includes transmitting information related to the displayed section and information on the device or recipient of receiving the content.

Accorrding to an embodiment of the present invention, an electronic device includes a communication module, a sensor, a touch panel which generates detection information in response to a touch made on a screen of the display module, and a processor which controls the communication module and the display module based on the detection information generated by the touch panel, wherein the processor controls checking a location of the electronic device by means of at least one of the communication module and the sensor, displaying a section related to the checked location among location-based sections by means of a display module of the electronic device, receiving content related to the section at least one of during, before, and after displaying the section, and displaying at least part of the content on the displayed section by means of the display module of the electronic device. Displaying the section related to the checked location includes displaying the section only when the electronic device is located at the selected location or in a range from the selected location. Receiving content includes receiving the content only while the content related to the section is displayed. Receiving content further includes receiving a signal notifying of the existence of inbound content, requesting the content in response to the signal, and receiving the content.

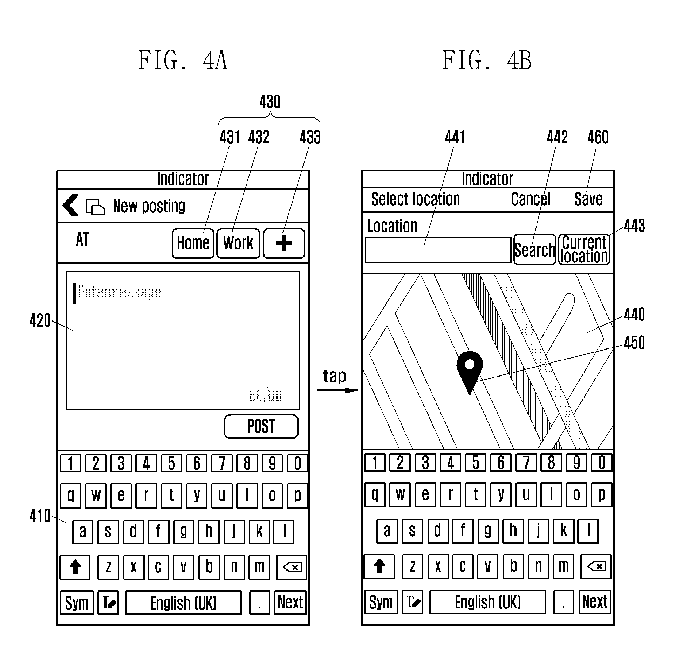

FIGs. 4A and 4B are diagrams illustrating user interface screens for designating a message receipt location according to an embodiment of the present invention.

Referring to FIG. 4A, the processor 120 of the electronic device 100 controls the display module 150 to display a keypad 410, a message input window 420, and a location configuration menu 430. The location configuration menu 430 includes a "Home" button 431, a "Work" button 432, and a "+" button 433. The location designation buttons (i.e., the "Home" button 431 and the "Work" button 432) correspond to the designated location information. The location information is stored in the memory 130. The location information includes at least one of latitude and longitude information, geographical address information (e.g. 123 Main Street, Miami, FL), and geographical address-related information. In this case, the geographical address-related information includes at least one of a name of a building (e.g. located at, near, or around), a geographical address (e.g. a building name, café name, city hall name, and department store name), structural work information (e.g. tunnel name, mountain name, and Cell IDentifier (ID) of a base station), an Internet Protocol (IP) address of the geographical address, and a phone number corresponding to the geographical address. In addition, the location information may include other information related to the geographical address. Furthermore, the location information may include information which is not related to the geographical address (e.g. information on the speed of a vehicle, vehicle identification information, and indication of the running state of a navigation application).

The names of the buttons for designation of locations (e.g. home, work, and gym) may be preset by the user. Alternatively, the name of a button may be configured automatically based on the corresponding location information. In this case, the term "button" may be used interchangeably with the terms "image" and "icon." If the user selects (e.g. taps) a location designation button (e.g. "Home" button 431), the user input module 140 (e.g. touch panel 252) detects the selection of the location designation button and generates the selection information for the processor 120. In response to the user's selection of the location designation button, the processor 120 configures the location matching of the selected location designation button as the location for receiving the content (e.g. message to be composed in the message input window 420). This location designation operation includes storing the location information as the tag information of the content.

Referring to FIG. 4B, in response to the user's selection of the "+" button 433, the processor 120 controls the display module 150 to display a location input window 441, a search button 442, and a current location configuration button 443. Also, the processor 120 executes a map application (e.g. load the map application from a non-volatile memory to a volatile memory) in response to the selection of the "+" button 433. The Global Positioning System (GPS) module 237 is activated in accordance with the execution of the map application. The GPS module 237 receives GPS signals from GPS satellites, calculates the current location (i.e., latitude and longitude) of the electronic device based on the GPS signals, and transfers the latitude and longitude information to the processor 120. Alternatively, the calculation operation may be performed by the processor 120 depending on the process of the map application. For example, the processor 120 may control the communication module 160 to transmit the calculated latitude and longitude information to the map provision server and receive the map around the latitude and longitude from the server. The processor 120 calculates the location by means of another communication module (e.g. RF module 234, Wi-Fi module 233, BT module 235, and NFC module 239).

The user manipulates the keypad 410 to input the location information to the electronic device 100. The processor 120 controls the user input module to receive the location information and control the display module 150 to display the location information received in the location input window 441. If the user taps the search button 442, the processor 120 controls the communication module 160 to transmit the location information input via the location input window 441 to the map provision server and to receive the map corresponding to the location information. Also, in response to the selection of the search button 442, the processor 120 controls the display module 150 to display a marker 450 indicating a location on the map 440. In response to the selection of the save button 460, the processor 120 performs the operation of designating the location where the marker 450 is placed as the content receipt location. In addition, the processor 120 generates a location designation button corresponding to the location where the marker 450 is placed. Whether to generate the location designation button is determined by the user. If it is determined to show the designation button, the name of the button is entered by the user or determined automatically based on the corresponding location information. The location designation button may be presented along with the location configuration menu 430.

In response to the selection of the current location configuration button 443, the processor 120 controls the display module 160 to display the map around the current location and present the marker corresponding to the current location on the map. Also, the processor 120 designates the location indicated by the current location information as the content receipt location.

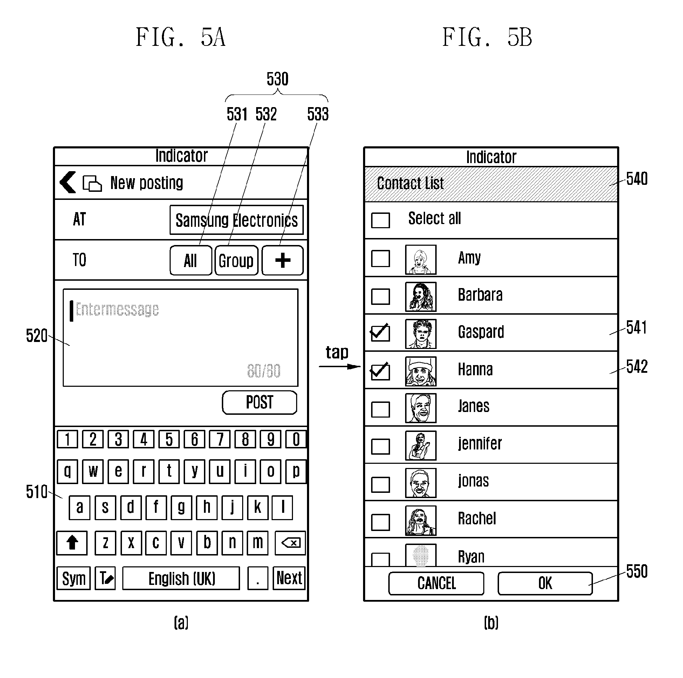

FIGs. 5A and 5B are diagrams illustrating user interface screens for designating the recipient of a message according to an embodiment of the present invention.

Referring to FIG. 5A, the processor 120 of the electronic device 100 controls the display module 150 to display a keypad 510, a message input window 520, and a recipient configuration menu 530.In this case, the location configuration menu 430 may also be displayed. The recipient configuration menu 530 includes an "All" button 531 for designating all the persons (i.e., an unspecified number of persons) located at the designated receipt location as the message recipients, a "Group" button 532 for designating at least one of preset groups as the message recipients, and a "+" button 533 for designating at least one person selected from the contact list as the message recipient.

In response to the selection (e.g. tap) of the "All" button 531, the processor 120 designates an unspecified number of persons as the recipients of the content (e.g. message composed via the message input window 520). The recipient designation operation includes saving the recipient information (e.g. value indication unspecified number of persons) as the tag information of the content.

In response to the "Group" button 532, the processor 120 controls the display module 150 to display a list of the recipient groups. In response to the selection of a group from the list, the processor 120 designates the persons belonging to the selected group as the recipients of the content.

Referring to FIG. 5B, the processor 120 controls the display module 150 to display the contact list 540 in response to the selection of the "+" button 533. The processor 120 designates the persons selected from the contact list 540, e.g. Gaspard and Hanna as denoted by reference numbers 541 and 542, as the recipients.

According to an embodiment of the present invention, various properties may be configured in addition to the recipient and location information. Table 1 exemplifies the properties that can be designated for content and descriptions thereof in association with a message processing scheme. The processor 120 controls the display module 150 to display various user interfaces in order for the user to designate the properties for the content.

**Table 1**

| Property | Description | |
|---|---|---|
| Expiry duration | If the expiry duration ends, the message is deleted so as not to reach the recipients. | |
| Number of receipts | If a number of recipients received a message reaches a predetermined value or if a number of transmissions of the message reaches a predetermined value, the message is deleted. | |
| Priority | A priority of presenting messages to the recipient in an order or a priority of attraction intensity with color, vibration, and font size is designated. | |
| | - Priority 1: top line display, font 20, red | |
| | - Priority 2: normal display, font 10, blue | |
| | - Priority 3: bottom line display, font 8, block | |
| Notify | The message is transferred to the recipient even when the recipient is not at the designated location. | |
| | If the sender sends the message, the message reaches the designated recipients. | |
| | - Notify off: If the sender sends the message, the message reaches the designated recipients who are within the designated location. | |
| Class | This indicates that the location is capable of receiving the corresponding message with a reception area (Geofence). | |
| | - Class 1: If the recipient enters the center of the reception area, the message is received. | |
| | - Class 2: If the recipient enters the range of 10m around the center of the reception area, the message is received. | |
| | - Class 3: If the recipient enters the boundary of the reception area, the message is received. | |
| Category | The recipient can navigate messages posted on a certain area (e.g. message board) by category (e.g. public/private message/simple information). | |
| Authorization Information | When the recipient requests a message, whether to expose the message and exposure level are determined based on the property designated in the authentication information. | |
| | Recipient information | The message can be receivable depending on the information related to the recipient. |
| | | - The message is received by only the mail recipients. |
| | | - The message is received by only the recipients with credit card membership rank of Very Important Person (VIP). |
| | Visit history | The message reception right and level varies depending on the number of visits of the recipient at the corresponding location. |
| | | - If the message includes a 10% off coupon and a 20% off coupon, |
| | | → recipient visited once: receive no message |
| | | → recipient visited three times: receive 10% off coupon |
| | | → recipient visited 5 times: receive 20% off coupon |
| Mobility | If the mobility is greater than or equal to a predetermined value, it is recognized that the recipient is inside a vehicle (e.g. car). | |
| | If a navigation application is running on the electronic device, it is recognized that the recipient is inside a car. | |

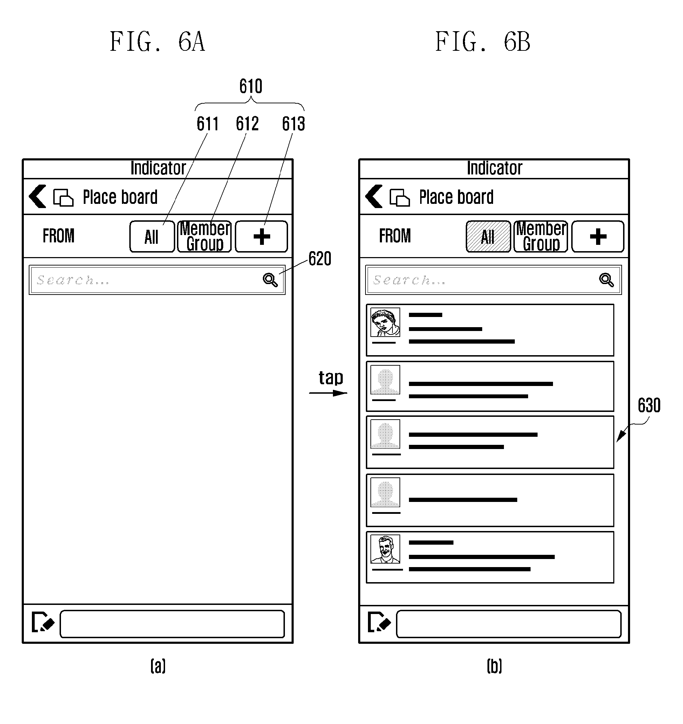

FIGs. 6A and 6B are diagrams illustrating user interface screens for designating an unspecified number of persons as message senders according to an embodiment of the present invention.

Referring to FIG. 6A, the processor 120 of the electronic device 100 controls the display module 150 to display a sender configuration menu 610 and a search window 620. The sender configuration menu 610 include an "All" button 611 for designating an unspecified number of persons as message senders (i.e. for receiving the messages posted at a region by an unspecified number of persons), the "Member Group" button 612 for designating a group as the message senders, and the "+" button for searching a contact list for a person and adding the found person as the message sender.

Referring to FIG. 6B, the processor 120 designates an unspecified number of persons as message senders in response to the selection of the "All" button 611. The operation of designating an unspecified number of persons as message senders includes storing the sender information (e.g. a value indicating unspecified number of persons) as tag information. The operation also includes controlling the communication module 160 (e.g. RF module 234) to transmit a request message to the server. Alternatively or additionally, the operation of designating an unspecified number of persons as message senders includes controlling the communication module 160 (e.g. Wi-Fi module 232) to broadcast a request message. The request message includes the information on the current location of the electronic device and the sender information (e.g. value indicative of receiving all the messages posted at the current location). The communication module 160 receives the senders' messages from at least one other device (e.g. server 164, electronic device 102, and electronic device 104) and sends the messages to the processor 120. The processor 120 controls the display module 150 to display the senders' messages.

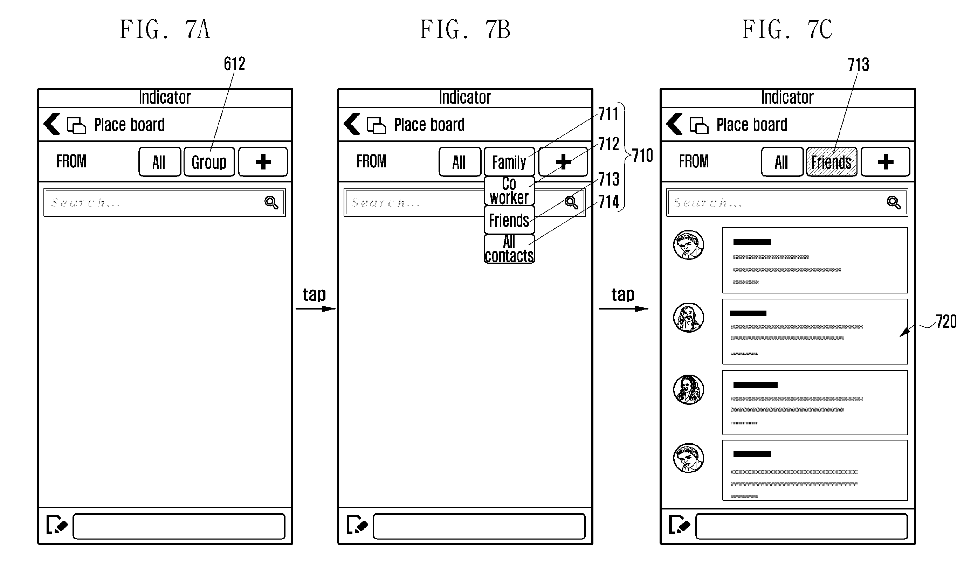

FIGs. 7A-7C are diagrams illustrating user interface screens for designating a group of persons as message senders according to an embodiment of the present invention.

Referring to FIG. 7A and FIG. 7B, the processor 120 controls the display module 150 to display a sender group list 710 in response to the selection of the "Group" button 612. The sender group list 710 includes groups of "Family" 711, "Coworker" 712, "Friends" 713, and "All contacts" 714.

Referring to FIG. 7B and FIG. 7C, in response to the selection of the group "Friends" 713, the processor 120 designates the selected group "Friends" 713 as the message sender. Also, the processor 120 controls the communication module 160 to broadcast and/or transmit a request message to a device (e.g. server 164).In this case, the request message includes the information on the current location of the electronic device 100 and the sender information (i.e., selected group information). The communication module 160 receives the messages (e.g. messages posted by the persons belonging to the selected group) from at least one other device (e.g., server 164, electronic device 102, and electronic device 104) and transfers the messages to the processor 120. The processor 120 controls the display module 150 to display the senders' messages 720.

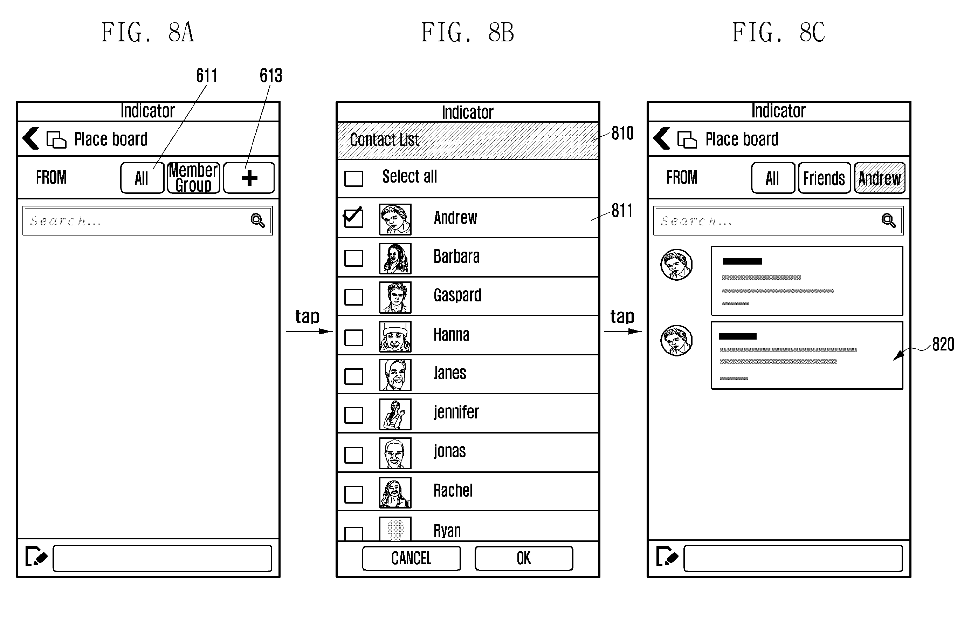

FIGs. 8A-8C are diagrams illustrating user interface screens for designating a person as the message sender according to an embodiment of the present invention.

Referring to FIG. 8A and FIG. 8B, the processor 120 controls the display module 150 to display the contact list 810 in response to the selection of the "+" button 613 for sender designation.

Referring to FIG. 8B and FIG. 8C, the processor 120 designates the person (e.g. "Andrew" 811) selected by the user from the contact list 810 as the message sender. The processor 120 also controls the communication module 120 to broadcast and/or transmit a request message to a device (e.g. server 164).In this case, the request message includes the information on the current location of the electronic device 100 and the sender information (i.e. information on the selected person). The communication module 160 receives the senders' messages from at least one other device (e.g., server 164, electronic device 102, and electronic device 104) in response to the request message and transfers these messages to the processor 120. The processor 120 controls the display module 150 to display the senders' messages 820.

According to an embodiment of the present invention, the processor 120 sends the server 164 the information on the current location of the electronic device and receives the senders' message from the server 1640 in response thereto. Alternatively or additionally, the processor 120 broadcasts the current location information by means of the communication module 160 and receives the senders' messages from other devices (e.g. electronic devices 102 and 104) in response thereto. The processor 120 notifies the users of the existence of the senders' messages and controls the display module 150 to display the senders' messages. The processor 120 notifies of the existence of the senders' message using a visual feedback (e.g., text message or Light Emitting Diode (LED) blinking) or an audio feedback (e.g. voice announcement), or a haptic feedback (e.g. motor vibration). In response to the selection of the "All" button 611, the processor 120 controls the display module 150 to display all the senders' messages. In response to the selection of a group (e.g. group "Friends" 713), the processor 120 controls the display module 150 to display the messages posted by the senders belonging to the group. In response to the selection of a person (e.g. "Andrew" 811 from the contact list, the processor 120 controls the display module 150 to display the messages posted by the selected person among all of the senders' messages.

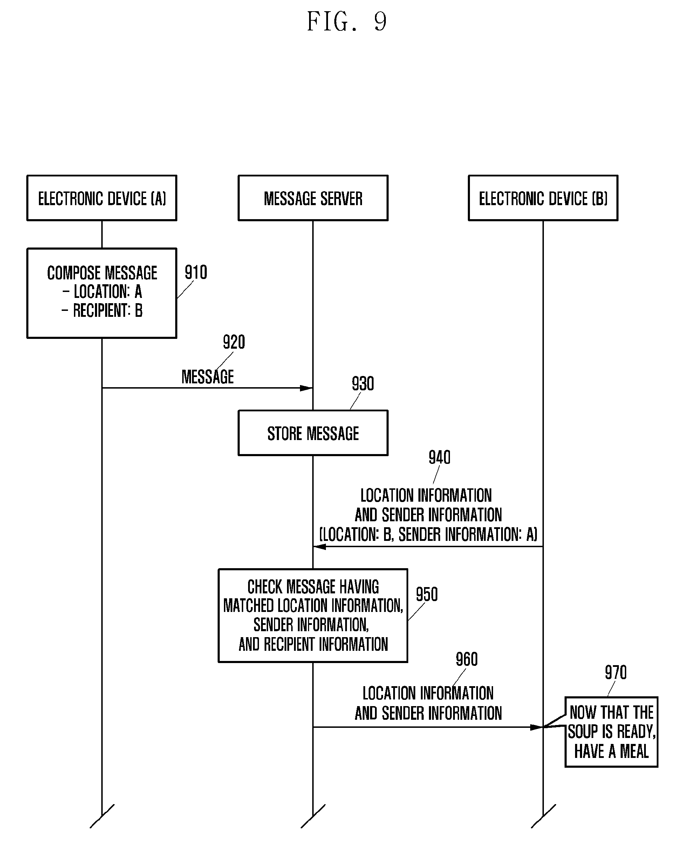

FIG. 9 is a signal flow diagram of a location-based message communication method between a designated sender and receiver according to an embodiment of the present invention.

Referring to FIG. 9, an electronic device A (e.g. electronic device 100) performs the operation of composing a message (e.g. storing the message presented in the message input window 420) in step 910. The electronic device A designates the location information A and recipient information B as the tag information of the composed message. The electronic device A sends a message server (e.g. server 164) the composed message along with the tag information (i.e., location information A and recipient information B) in step 920. The electronic device A may also send the message server the sender information as the tag information of the composed message. Alternatively, the electronic device A transmits the device identity information as the tag information of the composed message, instead of the sender information, in order for the message server to identify the electronic device A. The message server recognizes the sender of the message based on the device identity information (e.g. acquire the sender information corresponding to the device identity information from a user database).

The message server stores the received message and the tag information (e.g., location information A, recipient information B, and sender information or device identity information) in step 930.

The electronic device B (e.g. electronic device 104) sends the message server a request message including the current location information B and the sender information A in step 940. The electronic device B may also transmit the message server the recipient information in the request message. Alternatively, the electronic device B sends the message server the device identity information of the electronic device B instead of the recipient information. The message server recognizes the recipient information based on the device identity information.

The message server determines whether the location information A and B match each other in step 950. If A and B match each other, the message server determines whether the recipient information B included in the message matches the electronic device B and whether the sender information A received from the electronic device B matches the electronic device A which has transmitted the message. If both device information match, the message server delivers the message to the electronic device B.

The electronic device B displays the received message in step 970.

According to the location-based message communication method described with reference to FIG. 9, the following scenario is possible. A mother A leaves a message for her son B who will come home after school. In this case, the mother leaves a message saying "Now that the soup is ready, have a meal" for which the son B is designated as the recipient information and the home A is designated as the location information. This message is stored in the message server. If the son B comes home, the user device sends the message server its location information. In this case, since the son B has configured the device to receive the message sent by the mother A, the device sends the sender information. If the location information and sender information are received, the message server checks whether there is any message posted at location A by the mother A for the son B and, if so, sends the message to the son B.

According to an embodiment of the present invention, an electronic device A designates a vehicle (e.g. a car) as the message reception position and sends the location information (e.g. a value indicating that the message reception position is the car) to the message server. An electronic device B acquires the vehicle information (e.g. information indicating that a navigation application is running) and sends this information to the message server. The message server recognizes that the electronic device B is inside the car based on the vehicle information and delivers the message to the electronic device B. According to this embodiment, the following scenario is possible. Wife A leaves a message for her husband B about the time he is on his way home. At this time, the wife A leaves a message saying "drive safe" for which the husband B is designated as the recipient and a car A is designated as the location information, the message being posted on the car board of the message server. If the husband B gets in the car and starts the engine, the navigation device B mounted on the car sets the destination to "home" and sends the vehicle information to the message server. If this information is received, the message server sends the navigation device B the message which wife A has posted on the car board.

The user designates the sender information or not. Whether the sender information is designated or not, the location-based message communication scheme may be changed. The message communication scheme may be changed depending on whether the sender of the message has designated the recipient. Table 2 shows message communication schemes according to whether the sender designates the recipient and whether the recipient designates the sender.

**Table 2**

| Recipient designation of sender A | Sender designation of recipient B | Message communication scheme |
|---|---|---|
| Designate B as recipient | Designate A as sender | The message server delivers the message immediately as shown in FIG. 9. |
| No recipient designation (or ALL) | Designate A as sender | The message server delivers the message after sending notification to sender A as shown in FIG. 17. |
| Designate B as recipient | No sender designation | The message server delivers the message after sending notification to recipient B as shown in FIG. 16. |
| No recipient designation (or ALL) | No sender designation | No delivery. If recipient B searches messages and finds the message posted by sender A, the message server delivers the message after sending notification to sender A. |

The recipient may want to receive only the intended messages among all the messages posted on a board. In this case, it is possible to designate a property related to the message in addition to the sender information. By designating such a property, the recipient is capable of receiving the information on the messages having the designated property among the messages left by the designated sender at the corresponding location. For example, if a user wants to receive the public messages among the messages left at the corresponding location, the user sets the sender information to "All" and the property "category" to "public." Table 3 shows the properties that can be designated by the recipient and descriptions thereof in association with the message processing scheme.

**Table 3**

| Property | Description |
|---|---|
| Expiry duration | Information on the message with the expiry duration shorter than a predetermined time. |
| Number of receipts | Information on the message with the number of receivable times is equal to or greater than a predetermined value. |
| Category | Information on the message left with a category which matches the designated category |
| | (e.g. public/private message/simple information). |
| Sender information | Information on the message of which sender information matches the designated sender information. |
| | - Receive the information on the messages left by male senders |
| | - Received the information on the message of which senders is a seller group |

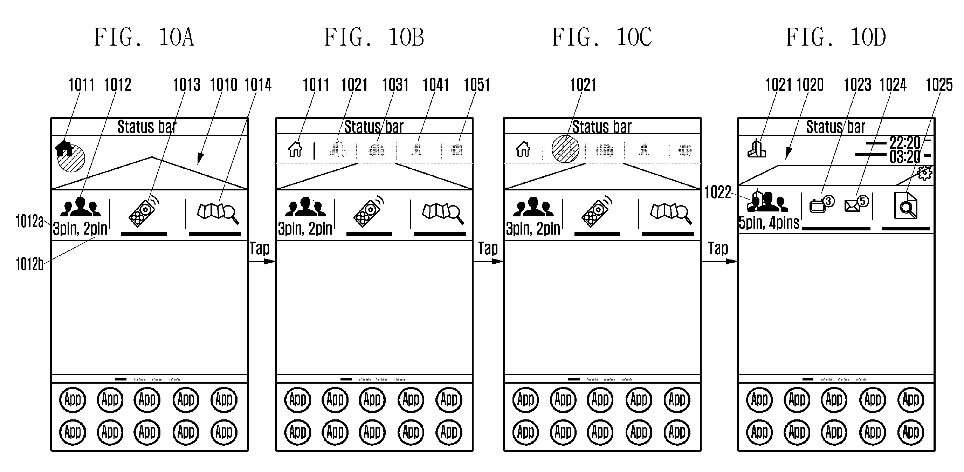

FIGs. 10A-10D are diagrams illustrating user interface screens having a plurality of location-based sections according to an embodiment of the present invention. In this case, the term "section" denotes a basic component for presenting information or content and may be of page, screen, part, column, row, icon, symbol, and menu. A section presents at least one item or article or includes at least one of text, image, photo, number, and motion picture. It is obvious to those skilled in the art that the section may be formed via various combinations of shape, size, and color.

Referring to FIG. 10A, the processor 120 of the electronic device 100 acquires location information by means of the communication module 160 (e.g., GPS module 237 and RF module 234) and/or the sensor module (e.g., gyro sensor 240B and acceleration sensor 240E). Alternatively, the processor 120 acquires the information related to the current location (e.g. access point named "home") by means of the communication module 160 (e.g. Wi-Fi module 232). If the acquired location information or location-related information matches "Home," the processor 120 controls the display module 150 to display the section 1010 related to "home" among the plural designated sections. The home section 1010 includes a home identifier icon 1011 for the user to identify the corresponding section as "Home," a home state icon 1012, a home-based function icon (e.g. icon of remote control function of controlling a TV and audio device installed at home), a home-based search function icon 1014 (e.g. icon of the function of searching a home device (e.g. home server) for data). The home state indicator icon 1012 includes an icon 1012a indicating a number of members located currently at home and an icon 1012b indicating a number of new messages (i.e., messages not checked yet by the user) posted on the home message board. In order to inform the user of the home state, the processor 120 receives an alarm message from the server relaying and managing the location-based message communication (e.g. server 164) periodically or in response to a request. The alarm message includes information on the members staying home and information on the posted messages.

Referring to FIG. 10A and 10B, in response to a user input of requesting guidance about the designated sections (e.g. tap on the home identifier icon 1011, indicated by the hatched circle), the processor 120 controls the display module 150 to display icons 1011, 1021, 1031, and 1041 representing the designated sections and a section edit icon 1501. Here, the edit icon 1051 is for adding a new section and editing any existing section (e.g., deletion and modification). Among the section icons 1011, 1021, 1031, and 1041, highlighted (e.g. with darkened color) is the icon 1011 representing the currently displayed section (e.g. home section 1010). The section indicator may be presented in the form of a text, a thumbnail, or a symbol.

Referring to FIG. 10C and FIG. 10D, in response to a user input requesting a change of the section (e.g. tap on the work section 1021 and gesture of dragging the finger contacting the home section 1010 in an upward/downward/leftward/rightward direction), the processor 120 control the display module 150 to display the section 1020 related to the location information of "Work." The work section 1020 includes the work identifier icon 1021, work state indicator icons 1023 and 1024, and a work-based search icon 1025 (for news, memo, and official announcement search). The icon 1023 indicates the number of new schedules, and icon 1024 indicates the number of new received emails.

According to an embodiment of the present invention, the processor 120 controls the display module 150 to display the sections as diminished in size in response to a user input requesting the display of all of the sections at a time on the screen (e.g. pinch-in gesture made by moving toward each other two fingers contacted on the home section 1010).

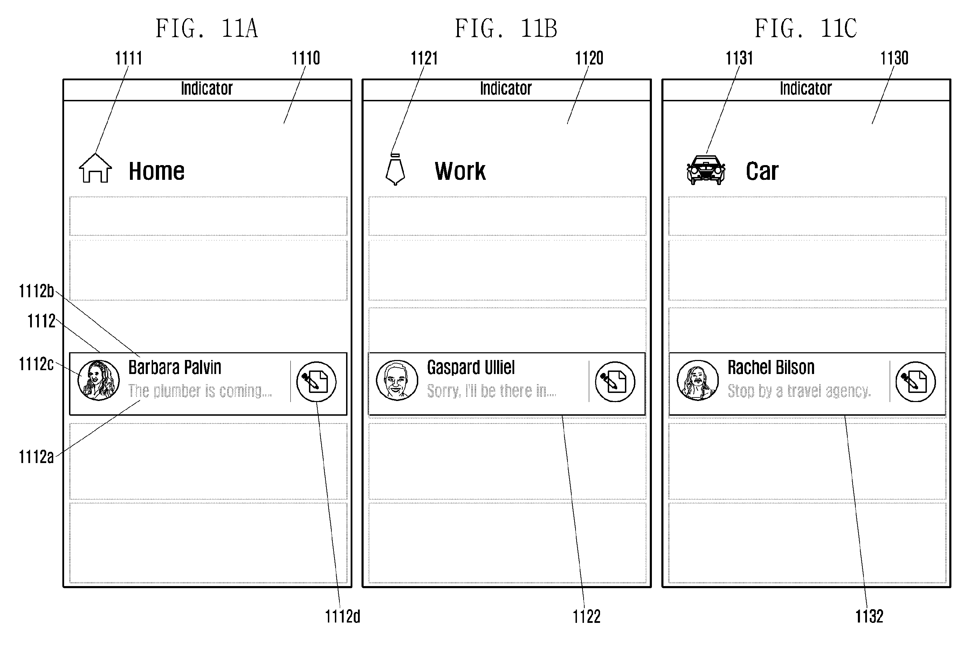

FIGs. 11A-11C are diagrams illustrating user interface screens of displaying a plurality of location-based sections according to an embodiment of the present invention.

Referring to FIGs. 11A-11C, the processor 120 of the electronic device 100 controls the display module 150 to display the home section 1110, the work section 1120, or the car section in response to a user input. The home section 1110 includes the home identifier icon 1111 and the information 1112 on the messages posted on the home message board. In this case, the information 1112 includes the message 1112a posted on the home message board, name 1112b of the person who posted the message 1112a on the home message board, a picture 1112c of the person who composed the message, and a message composition button 1112d for posting the message on the home message board. In this case, the message 1112a is the message posted most recently. The work section 1120 includes the work identifier icon 1121 and the information 1122 on the message posted on the work message board. The car section 1130 includes the car identifier icon 1131 and the information 1132 on the message posted on the car message board. The information 1132 includes the writer of the message, the device used for writing the message, the reader (i.e., receiver) of the message, and other information related to the device for use in receiving the message. The information includes at least one of text, image, symbol, icon, and motion picture.

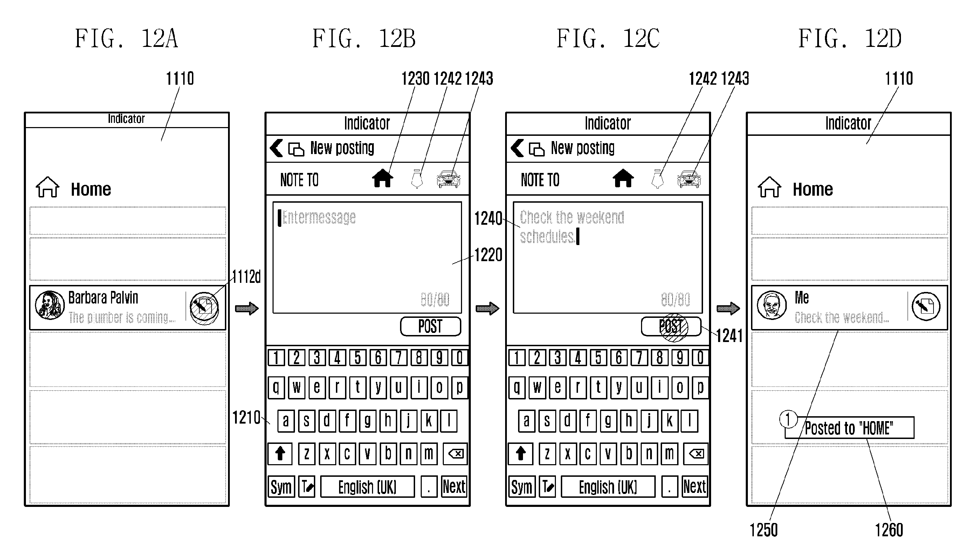

FIGs. 12A-12D are diagrams illustrating user interface screens for explaining the section-based message posting according to an embodiment of the present invention.

Referring to FIG. 12A, the processor 120 controls the display module 150 to display the home section 1110 in response to a user input. The processor 120 also acquires the location information and location-related information and, if the acquired information matches "Home," controls the display unit 150 to display the home section 1110.

Referring to FIG. 12B, the processor 120 controls the display module 150 to display the key pad 1210, the message input window 1220, and the home identity icon 1230 in response to the user's selection of the message composition button 1112d. Also, the deactivated work identity icon 1242 and car identity icon 1243 may be displayed too.

Referring to FIG. 12C, the processor 120 receives a message input via the user input module 140 (e.g. a tap on the touch panel 252) and controls the display module 150 to display the received message 1240 in the message input window 1220.

Referring to FIG. 12D, the processor 120 performs the operation of posting the message 1240 on the home message board in response to the selection of the "POST" button 1241. For example, the processor 120 sends the server the message 1240 along with its property value (location: home, recipient: home members). Then, the server posts (e.g. stores) the received message on the home message board (e.g. memory region) based on the property value. The processor 120 also controls the display module 150 to display the home section 1110. In this case, the home section 1110 includes the information 1250 on the message 1240 posted on the home message board and the notification message 1260 of notifying that the message 1240 has been posted on the home message board.

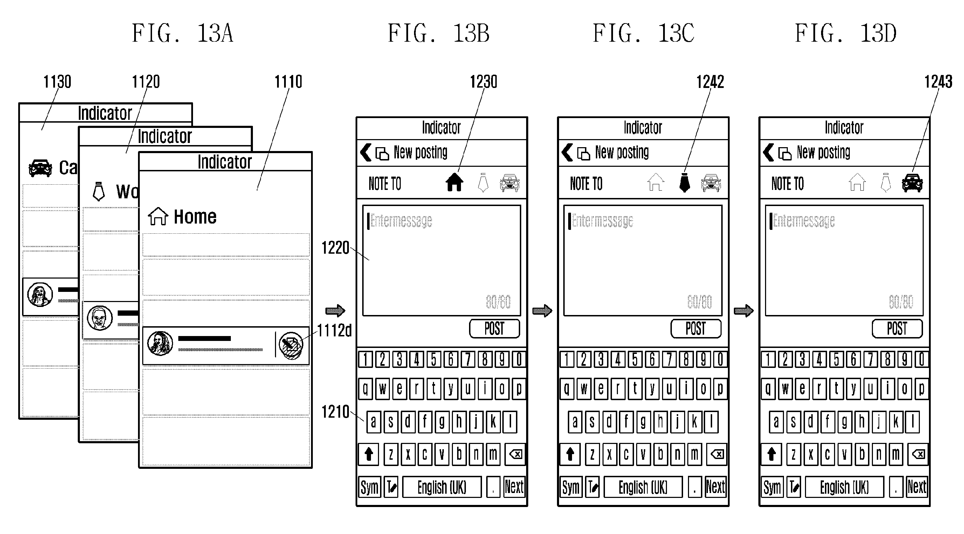

FIGs. 13A-13D are diagrams illustrating user interface screens for explaining the section change operation according to an embodiment of the present invention.

Referring to FIG. 13A and FIG. 13B, in the state that a section (e.g. the home section 1110) selected among the sections 1110, 1120, and 1130 is displayed, the message composition button 1112d is selected by the user on the home section 1110. Then, the processor 120 controls the display module 150 to display the keypad 1210, and the message input window 1220, the home identity icon 1230 in activated state (e.g. the state where the "home message board" is designated as the place of posting the message with highlight), the work identity icon 1242 in a deactivated state (e.g. the state where the "work message board" is not designated as the place of posting the message without highlight), and the car identity icon 1243 in the deactivated state.

Referring to FIG. 13C, the processor 120 activates the work identity icon 1242 (e.g. darkens the color), deactivates the home identity icon 1230 (e.g. lightens the color), and changes the message posting site from the home message board to the work message board in response to a user input requesting a change of the section (e.g. a tap on the work identity icon 1241 in the deactivated state).

Referring to FIG. 13D, the processor 120 activates the car identity icon 1243, deactivates the work identity icon 1243, and changes the message posting site from the home message board to the car message board in response to a user input request for a change of section (e.g. tap on the car identity icon 1242 in the deactivated state).

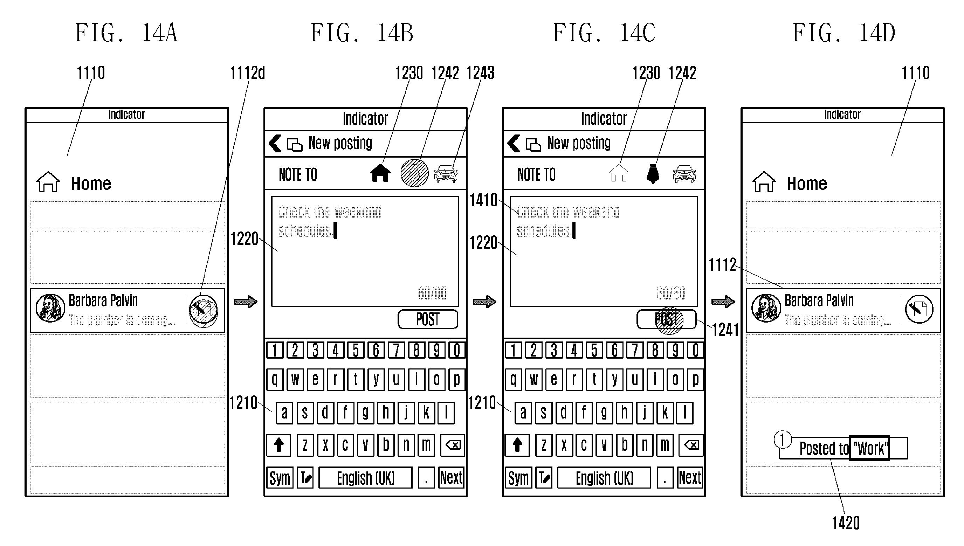

FIGs. 14A-14D are diagrams illustrating user interfaces for explaining section-based message posting operation according to an embodiment of the present invention.

Referring to FIG. 14A and FIG. 14B, the processor 120 controls the display module 1242 to display the keypad 1210, the message input window 1220, the home identity icon 1230 in the activated state, the work identity icon 1242 in the deactivated state, the car identity icon 1243 in the deactivated state, in response to the selection of the message composition button 1112d of the home section 1110. The processor 120 designates the home message board as the message posting site.

Referring to FIG. 14C, the processor 120 activates the work identity icon 1242 (e.g. darkens the color), deactivates the home identity icon 1230 (e.g. lightens the color), and changes the message posting site from the home message board to the work message board in response to a user input request for the change of section. The processor 120 receives the text input by means of the user input module 140 (e.g. the touch panel 252) and controls the display module to display the text 1410 in the message input window 1220.

Referring to FIG. 14C and FIG. 14D, the processor 120 posts the message 1410 on the work message board in response to a selection of the message posting button 1241. The processor 120 controls the display unit 150 to display the home section 1110.In this case, the home section 1110 includes information 1112 about the message posted on the home message board and a notification 1420 that the message 1410 has been posted on the work message board. The processor 120 controls the display module 150 to display the work section 1120 in response to the selection of the notification 1420. The work section 1120 includes the composed message 1410.

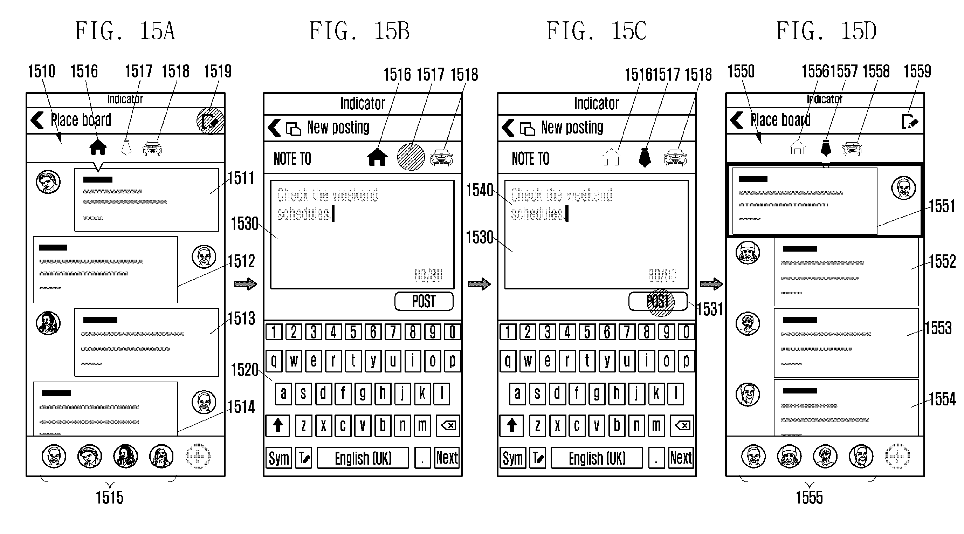

FIGs. 15A-15D are diagrams illustrating user interface screens for explaining a section-based message posting operation according to an embodiment of the present invention.

Referring to FIG. 15A, the processor 120 of the electronic device 100 controls the display unit 150 to display the home section 1510 in response to a user input. Alternatively, the processor 120 acquires the location information or location-related information and, if the acquired information matches "Home," controls the display module 150 to display the home section 1510. Alternatively, the processor 120 controls the display module 150 to display the home section 1510 in response to the selection of (e.g. a tap on) the message 1112a, name 1112b, or photo 1112c on the home section 1110 as shown in FIG. 11A. As described above, the processor 120 controls the communication module 160, based on the user input or location, so as to request the server for the message posted on the home message board related to the home section 1510. The processor 120 may also receive the message by means of the communication module 160 and control the display unit 150 to display the message in the home section 1510.

The home section 1510 includes the messages 1511, 1512, 1513, and 1514 posted on the home section, the information on the members allowed to receive the messages posted on the home message board (e.g. thumbnails 1515), the home identity icon 1516 in an activated state, the work identity icon 1517 in a deactivated state, the car identity icon 1518 in a deactivated state, and the message composition button 1519.

The messages 1511, 1512, 1513, and 1514 are arranged in an ascending order. That is, the most recently posted message 1511 is displayed at the top of the screen. Of course, it is also possible to arrange the messages in a descending order. If the user selects (e.g. taps) one of the thumbnails 1515, the processor 120 controls the display module 150 to display only the text written by the corresponding author in response thereto.

Referring to FIG. 15A and 15B, the processor 120 controls the display module 150 to display the home identity icon 1516 in an activated state, the work identity icon 1517 in a deactivated state, the car identity icon 1518 in a deactivated state, the keypad 1520, and the message input window 1530 in response to the selection of the message composition button 1519. The processor 120 designates the home message board as the message posting site.

Referring to FIG. 15B and FIG. 15C, the processor 120 activates the work identity icon (e.g. darkens the color), deactivates the home identity icon 1516 (e.g. lightens the color), and changes the message posting site from the home message board to the work message board in response to a user input requesting a change of section. The processor 120 receives the text input by means of the user input module 140 (e.g. touch panel 252) and controls the display module 150 to display the input text in the message input window 1530.

Referring to FIG. 15C and FIG. 15D, the processor 120 posts the text 1540 on the work message board in response to the selection of the message posting button 1531. The processor 120 controls the display module 150 to display the work section 1550. The work section 1550 includes the messages 1551 (e.g. 1540), 1552, 1553, and 1554, information on the members allowed to receive the message posted on the work message board (e.g. thumbnails 1555), the home identity icon 1556 in a deactivated state, the work identity icon 1557 in an activated state, the car identity icon 1556 in a deactivated state, and the message composition button 1559.

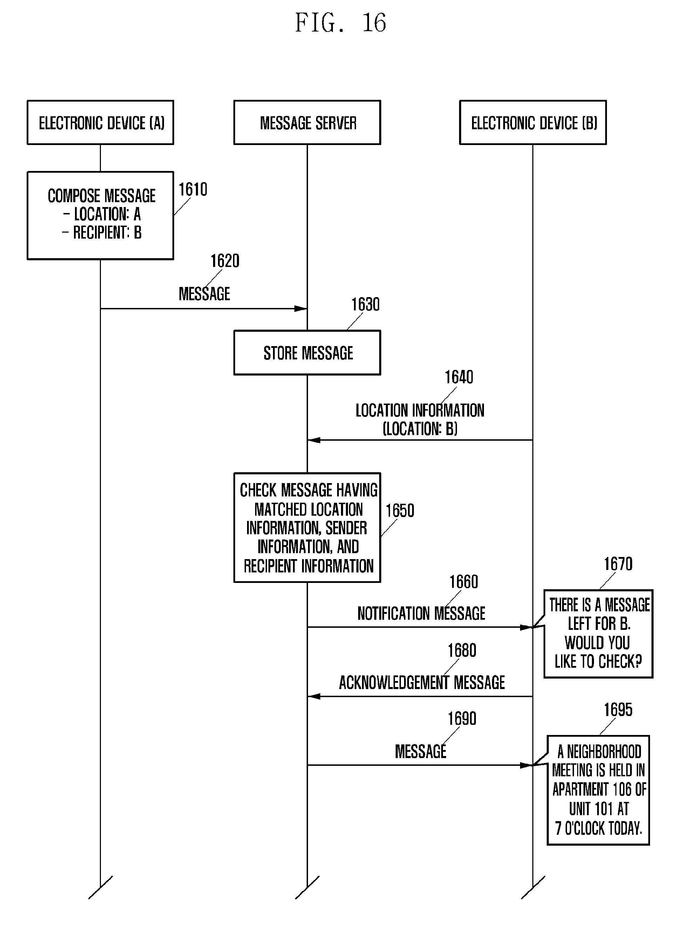

FIG. 16 is a signal flow diagram of a location-based message communication method with designation of recipient and sender according to an embodiment of the present invention.

Referring to FIG. 16, an electronic device A composes a message and designates the location information A and the recipient information B to the message in step 1610. The electronic device A sends the message composed with the location information A and the recipient information B to the message server in step 1620. The electronic device A may further send the message server sender information and device identity information.

The message server stores the message and the tag information (e.g. location information A, recipient information B, and sender information (or device identity information)) in step 1630.

The electronic device B sends the message server its current location information B in step 1640. The electronic device B may further send the message server recipient information or device identity information.

The message server determines whether the location information A and B match each other in step 1650. If A and B match each other, the message server determines whether the recipient information B designated to the message corresponds to the electronic device B. If so, the message server sends the electronic device B a notification message of the receipt of the message (including received message notification identifier (e.g. number), title of the received message, and part of the received message) in step 1660.

The electronic device B receives the notification message and outputs the notification message (e.g. outputs the notification message in the form of text or voice) in step 1670. The electronic device B sends the message server an acknowledgement message in response to a user input in step 1680.

The message server receives the acknowledgement message and, if the acknowledgement message indicates "accept," forwards the received message to the electronic device B in step 1690.

The electronic device B receives and displays the message in step 1695.

According to the location-based message communication method described with reference to FIG. 16, the following scenario is possible. An apartment complex manager A leaves a message saying "A neighborhood meeting will be held in apartment 106 of unit 101 at 7 o'clock today." for the heads of the households (including the recipient B) living in the apartment complex. In this case, the apartment complex manager A leaves the message with the designation of the location information A and recipient B. This message is stored in the message server. If recipient B enters the apartment complex, the device of recipient B sends the message server its location information. Since the device of recipient B is not configured to receive the message sent by the complex manager A, it does not send the information on the complex manager A as the sender information. Upon receipt of the location information of recipient B, the message server checks the message left for recipient B to receive at location A. Since, there is a message which manage A left for recipient B to receive at location A, the device of recipient B is not configured to receive the message left by manager A, the message server notifies the recipient B that there is a message left for recipient B (e.g. a message saying "There is a message left for B. Would you like to check?"). If the user B accepts to receive the message, the message server sends the user B the corresponding message.

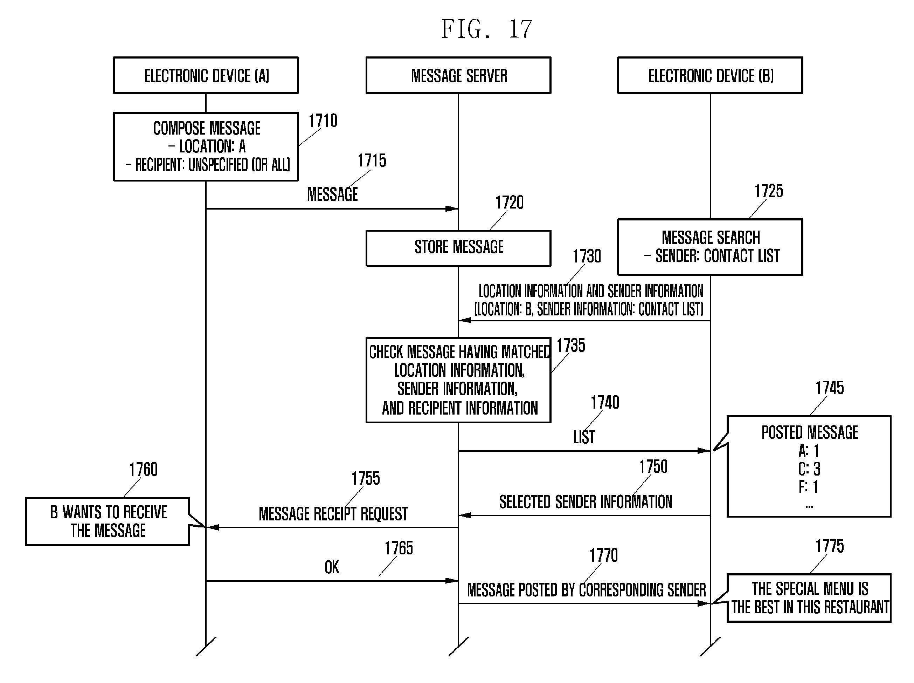

FIG. 17 is a signal flow diagram of a location-based message communication method with designation of a sender and no recipient according to an embodiment of the present invention.

Referring to FIG. 17, an electronic device A composes a message with the designation of the location information A in step 1710. The electronic device A sends the message server the composed message with the location information A of the electronic device A in step 1715. The electronic device A may further send the message server the sender information of the electronic device A or the device identity information.

The message server stores the received message and the tagged information (e.g. location information A and sender information (or device identity information) in step 1720.

In response to the sender information designated previously at the electronic device B or a user input, the electronic device B designates at least one contact of the message sender in step 1725. The electronic device B sends the message server the contact list including the designated sender information and the current location information B in step 1730. The electronic device B may further send the message server the recipient information or device identity information.

The message server determines whether the location information A and B match each other in step 1735. If A and B match, the message server checks messages related to the sender information received from the electronic device B in the storage unit (e.g. message board corresponding to the location information A equals B). The message server generates a list of the checked messages (e.g. author A: 1, author C: 3, and author F: 1) and sends the electronic device B a notification message including the list in step 1740.

The electronic device B receives the notification message and outputs the notification message (e.g. in the form of text or voice) in step 1745. The electronic device B detects the user's selection of a sender from the list and sends the message server the information on the selected sender (e.g. author A) in step 1750.

The message server receives the sender information from the electronic device B and sends the electronic device of the corresponding sender (e.g. electronic device A) a message saying "request message indicating message receipt request of the recipient B" in step 1755.

The electronic device A notifies the user (e.g. author A) of the receipt of the request message in step 1760. The electronic device A sends the message server an accept message in response to the user's acceptance in step 1765.

The message server forwards the message left by the corresponding sender, i.e. author A, to the electronic device B in step 1770.

The electronic device B receives and displays the message in step 1775.

Steps 1755, 1760, and 1765 are optional. That is, the message server may transmit the message to the electronic device B, without the authentication process of author A, upon receipt of the sender information (e.g. author A) from the electronic device B.

According to the location-based message communication method described with reference to FIG. 17, the following scenario is possible. User A visited a restaurant popularized via TV commercials and leaves a message to share the information about the restaurant with others. In this case, the user A leaves a message saying "The special menu is the best in this restaurant." with the designation of the location information A of the restaurant. The user A does not designate any specific recipient in order to share the information with everyone. This message is stored in the message server. User B who is a friend of user A visits the corresponding restaurant. User B searches the messages for the ones left by his/her acquaintances. In this case, the device of user B sends the message server the contact as the sender information designated by user B along with its location information A. Upon receipt of the message, the message server checks the information left by the corresponding senders for reception at the corresponding location and notifies user B of the result. If several persons have left messages in the contact list, user B requests the message left by user B's friend user A. This request message is sent to user A as the corresponding sender and, thus, the message selected by user A is sent to user B.

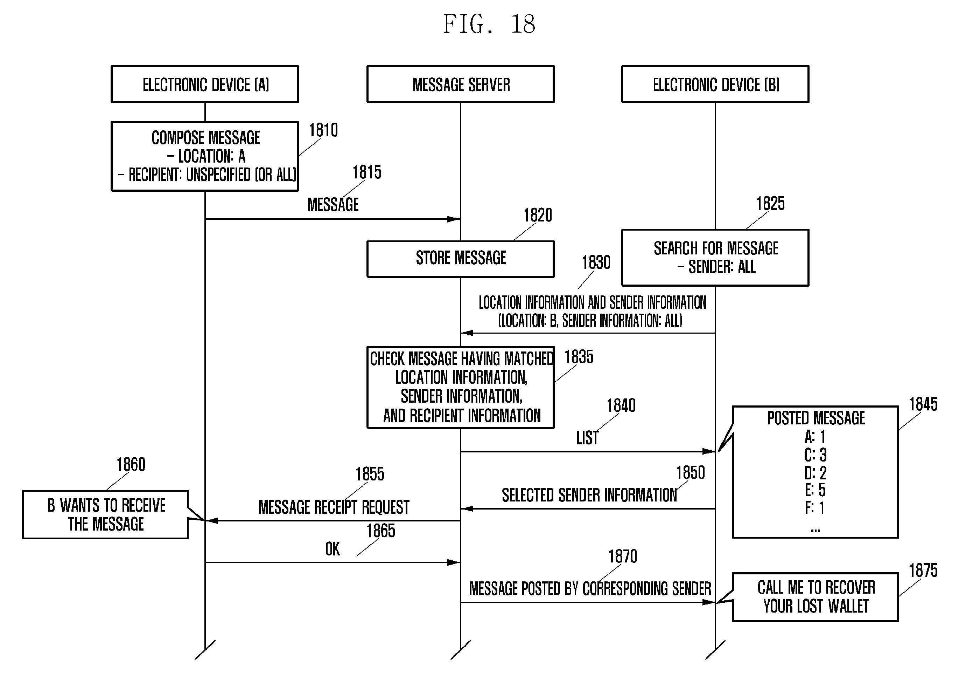

FIG. 18 is a signal flow diagram of a location-based message communication method with designation of an unspecified number of senders (e.g. all) and no receiver according to an embodiment of the present invention.

Referring to FIG. 18, an electronic device A composes a message and designates location information for the message in step 1810. The electronic device A sends the message server the message along with location information A in step 1815. The electronic device A may further send the message server the sender information or device identity information. The electronic device A may send the message server the property information (e.g. notification) designated for the message.

The message server stores the received message and tag information attached thereto (e.g. location information A and sender information (or device identity information) in step 1820.

The electronic device B designates an unspecified number of users (e.g. all) as the message receivers in response to a user input in step 1825. The electronic device B may designate the property information (e.g. notification) to the message in response to the user input. The electronic device B sends the message server the current location information B and sender information (e.g. value set to indicate an unspecified number of users) in step 1830. The electronic device B may further send the message server the designated property information. The electronic device B may send the message server the recipient information or device identity information.

The message server determines whether the location information A and B match each other in step 1835. If A and B match each other, the message server checks messages in the storage (e.g. message board corresponding to the location information A equals B). The message server generates a list of the checked messages (e.g. author A: 1, author C: 3, author D: 2, author E: 5, and author F:1) in step 1840. Alternatively, the message server may generate a list of the messages to which a property (e.g. notification) is attached among the checked messages. The message server may send the electronic device B a notification message including the generated list.

The electronic device B receives and displays the notification message in step 1845. The electronic device B detects the user's selection of a sender from the list and sends the information on the selected sender (e.g. author A) to the message server in step 1850.

The message server receives the sender information from the electronic device B and a message receipt request message indicating the receipt of the message from the electronic device of the corresponding sender, e.g. electronic device A in step 1855.

The electronic device A notifies the user (e.g. author A) of the receipt of the request message in step 1860. The electronic device A sends the message server an accept message in response to the user's acceptance in step 1865.

The message server delivers the message left by the corresponding sender, i.e. author A, to the electronic device B in step 1870.

The electronic device B receives and displays the message in step 1875.

According to the location-based message communication method described with reference to FIG. 18, the following scenario is possible. User A, who picked up a lost wallet on the way home, leaves a message on a message board of the area by taking notice of the possibility that the owner of the wallet would return to the corresponding area. In this case, user A leaves a message saying "Call me to recover your lost wallet." with a designation of the location information A matching the corresponding area and no specific recipient, to allow everyone to see it. In order to facilitate access to the corresponding message, the property "public" may be attached to the corresponding message. This message is stored in the message server. The next day, user B who is the owner of the lost wallet returns to the area A and searches for the message leaf by somebody on the message board of the corresponding area. In this case, the device of user B sets the sender information to all, to check all the messages left that designate location information A. In order to facilitate searching for contact information associated with the lost articles, it is also possible to send the message server a message with the property "public." Upon receipt of this message, the message server notifies user B of the existence of the message having the property "public." If this notification message is received, user B sends a receipt request for the message from user B. The receipt request is delivered to the sender A and thus the message content is delivered to user B according to user A's selection.

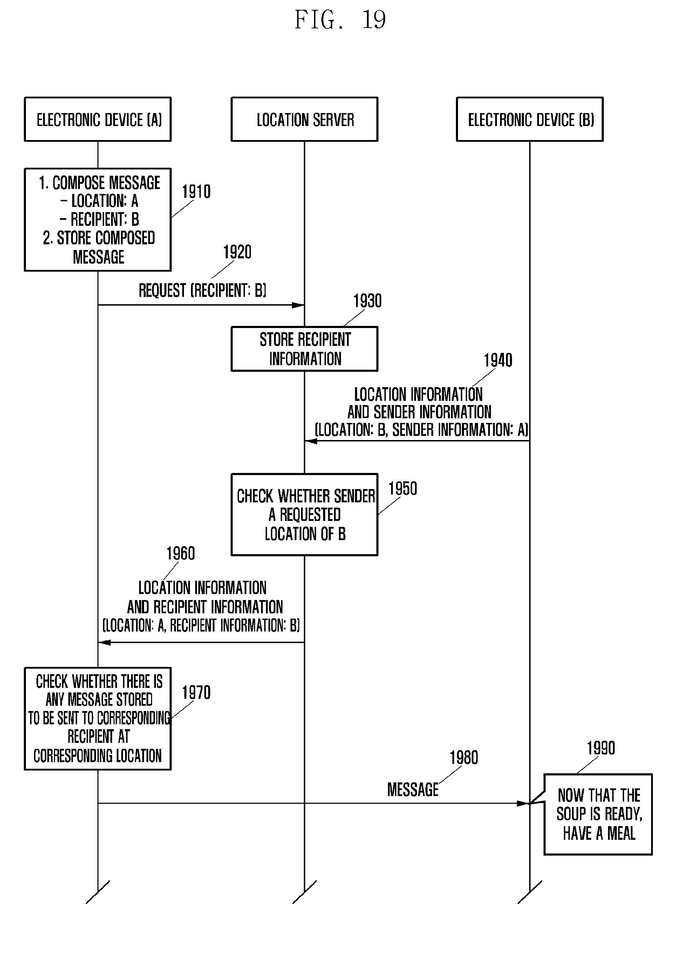

FIG. 19 is a signal flow diagram of a location-based message communication method with the designation of the recipient and the sender according to an embodiment of the present invention.

Referring to FIG. 19, the electronic device A composes a message and designates the location information A and recipient information B for the message in step 1910. The electronic device A may also store the composed message in the memory (e.g. the storage region A of the memory 130 which corresponds to the location information A). The electronic device sends the location server (e.g. server 164) a request message including recipient information B in step 1920. That is, the electronic device A transmits a request for the location recipient B to the location server. The electronic device A may further send the location server the recipient information or device identity information.

The location server stores the recipient information B in the storage unit (e.g. storage region A corresponding to sender A) in response to the request from the electronic device A. The location server may only manage the location information. That is, the user device (e.g. electronic device A) with which the corresponding message is composed stores the message, and the location server only manages the location information. The location server may further relay the message. The user device may manage the message in such a way to generate a message, designate property of the message, check the property of the message, control the message communication, and delete the message while an external device (e.g. message server) performs some functions (e.g. storing messages).

The electronic device B sends the location server a request message including the current location information B and the sender information A in step 1940. The electronic device B may further send the location server recipient information or device identity information.

The location server checks the storage region A to determine whether recipient A requested location information of recipient B in step 1950. If sender A requested location information of recipient B, the location server sends electronic device A a response message including recipient information B and location information B in step 1960.

The electronic device A determines whether location information B matches location information A in step 1970. If location information B matches location information A, the electronic device A determines whether there is any message to be transmitted to recipient B in the storage region A. If there is any message to be transmitted to recipient B in storage region A, the electronic device A sends the electronic device B the corresponding message via the location server or directly in step 1980.

The electronic device B receives the message from the electronic device A and displays the message (e.g. message saying "Now that the soup is ready, have a meal") in step 1990.

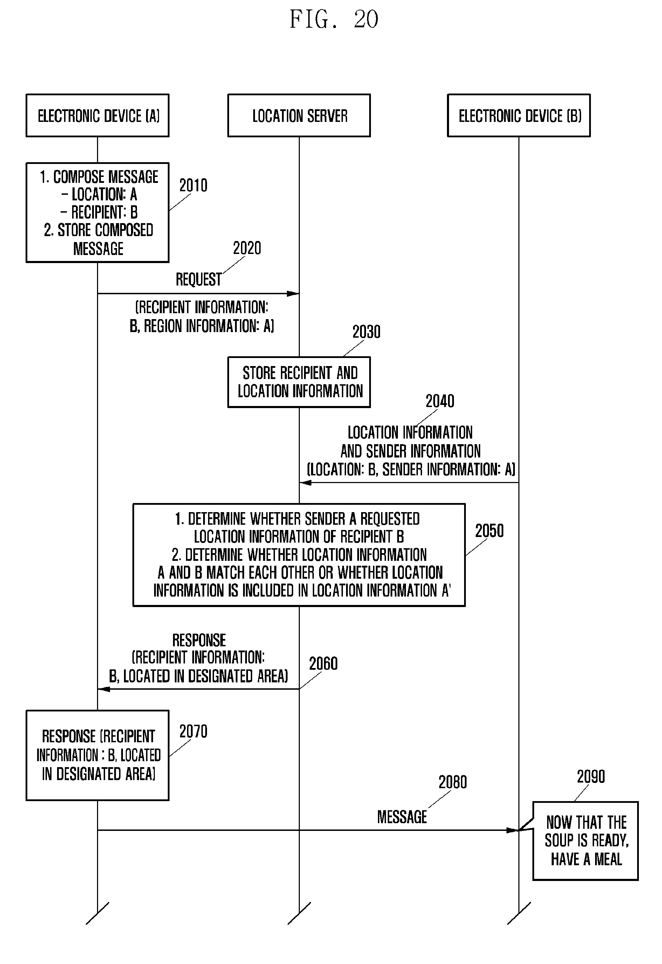

FIG. 20 is a signal flow diagram of a location-based message communication method with the designation of the recipient and the sender according to an embodiment of the present invention.

Referring to FIG. 20, the electronic device A composes a message and designates the location information A and recipient information B for the message in step 2010. The electronic device A stores the composed message in storage region A. The electronic device A sends the location server (e.g. server 164) a request message including recipient information B and location information A in step 2020. The electronic device A sends the location server the request message further including the designated region information A (e.g. class 2 in Table 1). That is, the electronic device A sends the location server a request for notifying when recipient B is within a radius of 10m of the designated location. The electronic device A may further send the location server the sender information or the device identity information.

The location server stores the recipient information B and the location information A in the storage region A in response to the request from the electronic device A in step 2030.

The electronic device B sends the location server a request message including the current location information B and the sender information A in step 2040. The electronic device B may further send the location server recipient information or device identity information.

The location server checks the storage region A to determine whether the sender A requested location information of recipient B in step 2050. If it is determined that the sender A has requested for the location information of the recipient B, the location server determines whether the location information B match the location information a. Alternatively, if sender A has requested for the location information of the recipient B, the location server may determine whether the location information B is a value in the range of the region information A'. If the location information B matches the location information A or is a value in the range of the region information A', the location server sends the electronic device A a response message informing that the recipient B is at the designated location or in the designated area at step 2060. In this way, the location server determines whether the recipient is at the designated location, and the electronic device A received the determination result from the server.

Upon receipt of the response from the location server, the electronic device A acquires the message to be transmitted to recipient B from the memory region A in step 2070. The electronic device A sends the electronic device B the acquired message via the location server or directly in step 2080.

The electronic device B receives the message from the electronic device A and displays the received message (e.g. "Now that the soup is ready, have a meal") in step 2090.

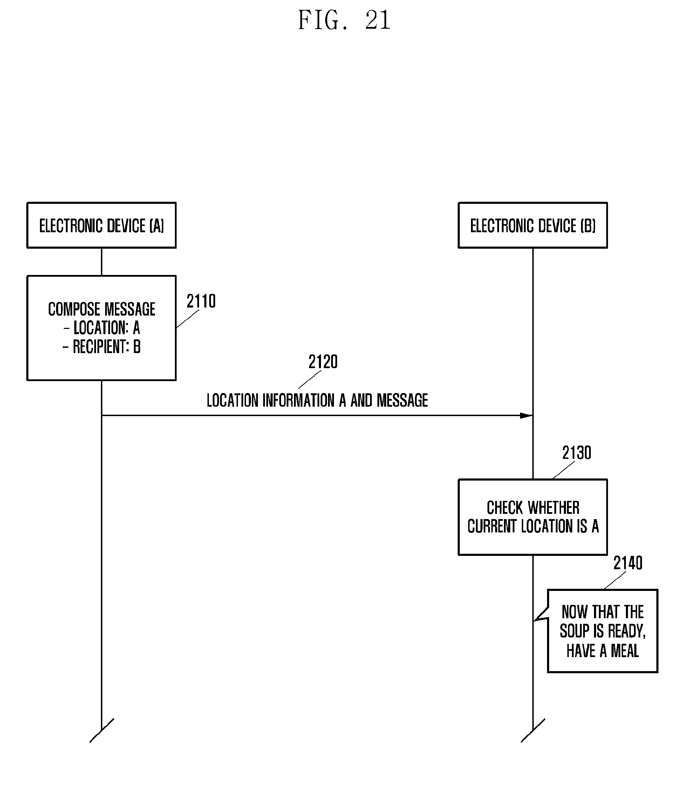

FIG. 21 is a signal flow diagram of a location-based direct message communication method according to an embodiment of the present invention.

Referring to FIG. 21, an electronic device A (e.g. electronic device 100) composes a message and designates location information A and recipient information B for the message in step 2110. The electronic device A sends the electronic device B (e.g. electronic device 102) the composed message with the location information A in step 2120. The electronic device B receives and stores the message and the location information A.

The electronic device B acquires the current location information B in step 2130. The electronic device B determines whether the acquired location information B matches the stored location information A. If the location information B matches the location information A, the electronic device B displays the message (e.g. "Now that the soup is ready, have a meal") in step 2140. The electronic device B retains the received message and, if it is located at the designated location A, displays the message to the user.

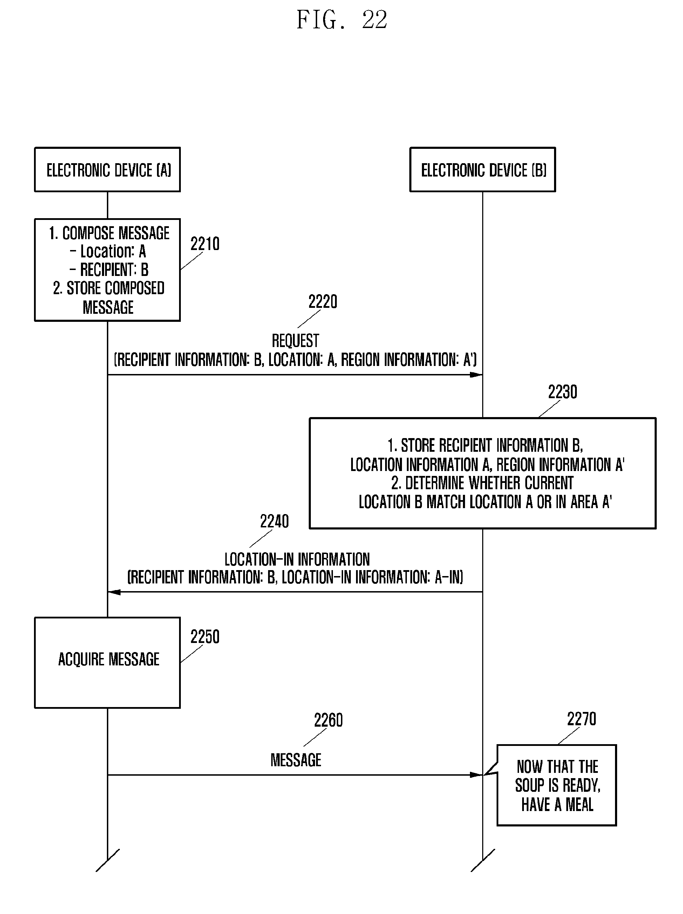

FIG. 22 is a signal flow diagram of a location-based direct message communication method according to an embodiment of the present invention.

Referring to FIG. 22, an electronic device A composes a message and designates location information A and recipient information B for the message in step 2210. The electronic device A stores the composed message in the storage region A. The electronic device A sends the electronic device B a request message including at least the location information A in step 2020. The electronic device A sends the electronic device B the request message further including the designated region information A'. That is, the electronic device A sends the electronic device B a request for notifying when the recipient B is located at the designated location A or in the designated area A'.

The electronic device B stores the received information (e.g. at least the location information A among the recipient information B, the location information A, and the area information A') in response to the request from the electronic device A. The electronic device B determines whether the acquired location information B matches the stored location information A. Alternatively, the electronic device B may determine whether the location information B is a value in the range of the area information A'. If the location information B matches the location information A or is in the range of the region information A', the electronic device B sends the electronic device A a response message informing the electronic device A that the recipient B is located at the designated location A or is in the designated area A' in step 2240.

Upon receipt of the response from the electronic device B, the electronic device A acquires the message to be transmitted to recipient B from the storage region A in step 2250. The electronic device A sends the electronic device B the acquired message in step 2260.

The electronic device B receives the message from the electronic device A and displays the received message (e.g. "Now that the soup is ready, have a meal") in step 2270. As described above, the methods and electronic devices according to various embodiments of the present invention are advantageous in terms of being able to transmit a location-based message to a person or an unspecified number of persons and receive the location-based message from a person or an unspecified number of persons.

According to an embodiment of the present invention, a method of an electronic device having a communication function includes transmitting location information of the electronic device; receiving a notification message notifying of an inbound message in association with the location information; receiving a user input correlated to the notification message; and receiving the inbound message in response to the user input. The method further includes transmitting an acknowledgement message including sender information selected by the user among a plurality of sender information, the notification message notifying of the inbound messages sorted per sender information.

According to an embodiment of the present invention, a method of operating an electronic device having a communication function includes transmitting at least one sender information and a location information of the electronic device; receiving and displaying a notification message notifying of existence of an inbound message corresponding to the at least one sender information and the location information; detecting user selection of at least one of the at least one sender information; transmitting the selected sender information; and receiving the inbound message corresponding to the selected sender information.

According to an embodiment of the present invention, a method of operating an electronic device having a communication function includes transmitting location information designated for a message; receiving a message request including a recipient information; and transmitting an acknowledgement message for accepting receipt of the message in response to the user input to the message request.

According to an embodiment of the present invention, a method of operating an electronic device having a communication function includes storing a message; designating first location information and first recipient information in association with the message; transmitting at least the first recipient information among the first location information and the first recipient information; receiving second location information and second recipient information; and transmitting the message when the second recipient information corresponds to the first recipient information and the second location information corresponds to the first location information.

According to an embodiment of the present invention, a method of operating an electronic device having a communication function includes receiving and storing location information and a message; acquiring location information of the electronic device; and displaying the message when the acquired location information corresponds to the stored location information.

According to an embodiment of the present invention, a method of operating an electronic device having a communication function includes receiving and storing location information; acquiring location information of the electronic device; transmitting, when the acquired location information corresponds to the stored location information, at least the recipient information among the recipient information and the acquired location information; and receiving and displaying a message corresponding to the recipient information.

According to an embodiment of the present invention, a method of operating an electronic device having a communication function includes displaying, by a display module of the electronic device, at least one section among a plurality of location-based sections; receiving a user input to the displayed section; receiving a content via the display module; and transmitting the content, using a communication module of the electronic device, based on the displayed section and at least part of the user input. The plurality of location-based sections include at least one of a home-related section, a work-related section, a car-related section, and a selected-geographical location-related section. The receiving of the user input includes displaying at least one of text, symbol, icon, motion picture, and image representing at least one receiving device or recipient information on the section; and receiving a user input made with at least one touch or hovering gesture on to at least one of the text, symbol, icon, motion picture, and still picture. The method further includes displaying an input window in response to at least part of receiving the user input. The method may further include receiving an input made to at least one of the text, symbol, motion picture, icon, and still picture using the input window. Transmitting the content includes transmitting information related to the displayed section and information on the device or recipient of receiving the content. Transmitting the content includes transmitting the message composed via the input window along with location information related to the electronic device or the at least one section. The transmitting of the content includes transmitting information on the recipient to receive the composed message. The method may further includes displaying, after transmitting the composed message, the at least one section including the composed message. The method may further include receiving a message request including the recipient information; and transmitting an acknowledgement message indicating acceptance of receiving the composed message in response to a user input to the message request. The method may further include storing the composed message; transmitting at least the first recipient information among the first location information and the first recipient information; receiving at least one among the second location information and the second recipient information; and transmitting the stored message depending on whether the second recipient information matches the first recipient information and/or the second location information matches the first location information. The method may further include displaying an input window on the section and identifiers representing the plural sections, a first identifier representing the displayed section being highlighted among the identifiers. The method may further include detecting user selection of a second identifier among the identifiers; highlighting the selected second identifier instead of the first identifier; and changing a receipt location of the content to the receipt location of the section corresponding to the second identifier. The method may further include changing the displayed section in response to the user input.

According to an embodiment of the present invention, a method of operating an electronic device includes checking, by the electronic device, a location of the electronic device; displaying, on a display module of the electronic device, a section related to the checked location among location-based sections; receiving a content related to the displayed section at least one of during, before, and after displaying the section; and displaying at least part of the content on the displayed section. The displaying of the section related to the checked location includes displaying the section only when the electronic device is located at the selected location or in a range from the selected location. Receiving content includes receiving the content only while the content related to the section is displayed. Receiving content may comprise receiving a signal notifying of existence of inbound content; requesting for the content in response to the signal; and receiving the content. The method may further include transmitting location information on the checked location; and receiving a message corresponding to the location information, wherein the displayed section includes the received message or an indicator indicating the message. The method may further include transmitting the location information related to the displayed section; receiving a notification message notifying of existence of the inbound message corresponding to the location information; receiving a user input in association with the notification message; and receiving the inbound message in response to the user input, wherein the displayed section includes the received message or an indicator indicating the message. The method may further comprise transmitting at least one sender information and location information related to the displayed section; receiving and displaying a notification message notifying of existence of the inbound message corresponding to the at least one sender information and the location information; detecting user selection of at least one of the at least one sender information; transmitting the selected sender information; and receiving the inbound message corresponding to the selected sender information, wherein the displayed section includes the received message or an indicator indicating the message.

According to an embodiment of the present invention, at least some of the devices (for example, modules or functions thereof) or the method (for example, operations) may be implemented by a command stored in a non-transitory computer-readable storage medium in a programming module form. When the instructions are executed by at least one processor (e.g., the processor 210), the at least one processor may perform functions corresponding to the instructions. The non-transitory computer-readable storage medium may be, for example, the memory 220. At least a part of the programming module may be implemented (for example, executed) by, for example, the processor 210. At least some of the programming modules may include, for example, a module, a program, a routine, a set of instructions or a process for performing one or more functions.

The non-transitory computer-readable recording medium may include magnetic media such as a hard disk, a floppy disk, and a magnetic tape, optical media such as a Compact Disc Read Only Memory (CD-ROM) and a Digital Versatile Disc (DVD), magneto-optical media such as a floptical disk, and hardware devices specially configured to store and perform a program instruction (for example, programming module), such as a Read Only Memory (ROM), a Random Access Memory (RAM), a flash memory and the like. In addition, the program instructions may include high class language codes, which can be executed in a computer by using an interpreter, as well as machine codes made by a compiler. The aforementioned hardware device may be configured to operate as one or more software modules in order to perform the operation of the present invention, and vice versa.

The embodiments disclosed in the specification and drawings are merely presented to easily describe technical contents of the present invention and help the understanding of the present invention and are not intended to limit the scope of the present invention. Therefore, all changes or modifications derived from the technical idea of the present invention as well as the embodiments described herein should be interpreted to be included within the scope of the present invention as defined in the appended claims and their equivalents.

## Claims

1. A method of operating an electronic device having a communication function, the method comprising:
transmitting location information of the electronic device;
receiving a notification message notifying of an inbound message in association with the location information;
receiving a user input related to the notification message; and
receiving the inbound message in response to the user input.

2. The method of claim 1, further comprising transmitting an acknowledgement message including sender information selected by the user among a plurality of sender information, and the notification message notifying of the inbound messages is sorted per sender information.

3. A method of operating an electronic device having a communication function, the method comprising:
transmitting sender information and location information of the electronic device;
receiving and displaying a notification message notifying existence of an inbound message corresponding to the sender information and the location information;
detecting user selection of the sender information;
transmitting the selected sender information; and
receiving the inbound message corresponding to the selected sender information.

4. A method of operating an electronic device having a communication function, the method comprising:
transmitting location information designated for a message;
receiving a message request including recipient information; and
transmitting an acknowledgement message for accepting receipt of the message in response to a user input to the message request.

5. A method of operating an electronic device, the method comprising:
displaying, by a display module of the electronic device, at least one section among a plurality of location-based sections;
receiving a user input to the displayed section;
receiving a content via the display module; and
transmitting the content, using a communication module of the electronic device, based on the displayed section and at least part of the user input.

6. The method of claim 5, wherein the plurality of location-based sections comprises at least one of a home-related section, a work-related section, a car-related section, and a selected-geographical location-related section.

7. The method of claim 5, further comprising displaying an input window in response to at least part of receiving the user input.

8. The method of claim 7, further comprising receiving an input made of at least one of the text, symbol, motion picture, icon, and still picture using the input window.

9. The method of claim 5, wherein transmitting the content comprises transmitting information on a recipient to receive a composed message.

10. The method of claim 5, further comprising:
receiving a message request including recipient information;
transmitting an acknowledgement message indicating acceptance of receiving a composed message in response to a user input to the message request.

11. The method of claim 5, further comprising displaying an input window on the at least one section and identifiers representing the plurality of location-based sections, a first identifier representing the displayed at least one section being highlighted among the identifiers.

12. A method of operating an electronic device, the method comprising:
checking, by the electronic device, a location of the electronic device;
displaying, on a display module of the electronic device, a section related to the checked location among location-based sections;
receiving a content related to the displayed section in at least one time period of during, before, and after displaying the section; and
displaying at least part of the content on the displayed section.

13. The method of claim 12, wherein displaying the section related to the checked location comprises displaying the section when the electronic device is located at a selected location or in a range from the selected location.

14. The method of claim 12, wherein receiving the content comprises receiving the content while the content related to the section is displayed.

15. The method of claim 12, wherein receiving the content comprises:
receiving a signal notifying existence of inbound content;
requesting the content in response to the signal; and
receiving the content.

16. The method of claim 12, further comprising:
transmitting location information on the checked location; and
receiving a message corresponding to the location information,
wherein the displayed section includes the received message or an indicator indicating the message.

17. The method of claim 12, further comprising:
transmitting location information related to the displayed section;
receiving a notification message notifying existence of an inbound message corresponding to the location information;
receiving a user input in association with the notification message; and
receiving the inbound message in response to the user input,
wherein the displayed section includes the received inbound message or an indicator indicating the inbound message.

18. The method of claim 12, further comprising:
transmitting at least one sender information and location information related to the displayed section;
receiving and displaying a notification message notifying existence of an inbound message corresponding to the at least one sender information and the location information;
detecting a user selection of at least one of the at least one sender information;
transmitting the selected sender information; and
receiving the inbound message corresponding to the selected sender information,
wherein the displayed section includes the received inbound message or an indicator indicating the inbound message.

19. An electronic device comprising:
a communication module;
a display module; and
a processor configured to control the communication module and the display module based on information detected on the display module,
wherein the processor is further configured to control displaying at least one section among a plurality of location-based sections via the display module, receiving a user input made on the displayed at least one section; receiving content input via the display module, and transmitting the content based on the displayed at least one section and at least part of the user input.

20. The electronic device of claim 19, wherein the plurality of location-based sections comprises at least one of a home-related section, a work-related section, a car-related section, and a selected geographical location-related section.

21. The electronic device of claim 19, wherein the processor is further configured to control displaying an input window in response to receiving at least part of the user input.

22. The electronic device of claim 21, wherein the processor is further configured to control receiving the input made to at least one of a text, symbol, motion picture, icon, and still picture using an input window.

23. The electronic device of claim 19, wherein transmitting the content comprises transmitting information related to the displayed at least one section and information on the electronic device or a recipient of receiving the content.

24. An electronic device comprising:
a communication module;
a sensor;
a touch panel configured to generate detection information in response to a touch made on a screen of a display module; and
a processor configured to control the communication module and the display module based on the detection information generated by the touch panel,
wherein the processor is further configured to control checking a location of the electronic device via at least one of the communication module and the sensor, displaying a section related to the checked location among location-based sections via the display module, receiving content related to the section in at least one time period of during, before, and after displaying the section, and displaying at least part of the content on the displayed section via the display module.

25. The electronic device of claim 24, wherein displaying the section related to the checked location comprises displaying the section only when the electronic device is located at a selected location or in a range from the selected location.

26. The electronic device of claim 24, wherein receiving the content comprises receiving the content only while the content is displayed.

27. The electronic device of claim 24, wherein receiving the content comprises receiving a signal notifying existence of inbound content, requesting the content in response to the signal, and receiving the content.
